# EUROPÄISCHE PATENTSCHRIFT

(11) **EP 2 257 841 B1**
(45) Veröffentlichungstag und Bekanntmachung des Hinweises auf die Patenterteilung: **13.04.2016**
(21) Anmeldenummer: 09705239.3
(22) Anmeldetag: 28.01.2009
(51) Int. Cl.: D21H 21/40, B42D 25/29, G02B 5/30, G03H 1/02

(54) **SICHERHEITSELEMENT MIT POLARISATIONSMERKMAL**
SECURITY ELEMENT WITH POLARISATION FEATURE
ÉLÉMENT DE SÉCURITÉ AVEC CARACTÉRISTIQUES DE POLARISATION

(30) Priorität: 29.01.2008 DE 102008006533
(43) Veröffentlichungstag der Anmeldung: 08.12.2010
(73) Patentinhaber: Giesecke & Devrient GmbH, 81677 München (DE)
(72) Erfinder: HOFFMÜLLER, Winfried, 83646 Bad Tölz (DE); BURCHARD, Theodor, 83703 Gmund (DE); RENNER, Patrick, 83677 Reichersbeuern (DE)
(74) Vertreter: Niedermeier, Peter
(86) Internationale Anmeldenummer: PCT/EP2009/000547
(87) Internationale Veröffentlichungsnummer: WO 2009/095227

(56) Entgegenhaltungen:
- EP-A1- 1 189 079
- EP-A2- 0 420 261
- WO-A1-02/00446
- WO-A2-02/085642
- WO-A2-2005/108108

## Beschreibung

Die Erfindung betrifft ein Sicherheitselement zur Echtheitssicherung eines Wertgegenstands, wie eines Sicherheitspapiers, eines Wertdokuments oder eines Markenartikels, aufweisend eine reflektierende Schicht, über der in wenigstens einem Teilbereich oder vollflächig eine Phasenverzögerungsschicht angeordnet ist.

Die Erfindung betrifft außerdem ein Verfahren zur Herstellung des Sicherheitselements, ein Sicherheitspapier und ein Wertdokument mit dem erfindungsgemäßen Sicherheitselement und ein Verfahren zur Herstellung des Sicherheitspapiers und des Wertdokuments.

Ferner betrifft die Erfindung ein Transferband mit einer Vielzahl von als Transferelement ausgebildeten erfindungsgemäßen Sicherheitselementen.

Wertgegenstände werden zur Absicherung gerne mit Sicherheitselementen ausgestattet, die eine Überprüfung der Echtheit des Wertgegenstands gestatten und die zugleich als Schutz vor unerlaubter Reproduktion dienen. Wertgegenstände im Sinne der vorliegenden Erfindung sind insbesondere Banknoten, Aktien, Kreditkarten, Gesundheitskarten, Anleihen, Urkunden, Gutscheine, Schecks, hochwertige Eintrittskarten, aber auch andere fälschungsgefährdete Papiere, wie Pässe oder sonstige Ausweisdokumente und Wertdokumente, sowie Produktsicherungselemente, wie Etiketten, Siegel, Verpackungen, hochwertige Produkte, wie Markenartikel und dergleichen. Der Begriff "Wertgegenstand" schließt im Folgenden alle derartigen Gegenstände, Dokumente und Produktsicherungsmittel ein. Unter "Sicherheitspapier" wird eine noch nicht umlauffähige Vorstufe zu einem Wertdokument verstanden.

Ein Sicherheitselement sollte sowohl möglichst individuell gestaltet sein, um eine eindeutige Identifizierung des gesicherten Gegenstands zu ermöglichen, als auch möglichst schwer nachahmbar sein, um einen hohen Fälschungsschutz zu gewährleisten. Über einen gewissen Zeitraum haben optisch variable Sicherheitselemente, wie Sicherheitselemente mit betrachtungswinkelabhängigen Effekten, diesen Zweck gut erfüllt. Insbesondere Sicherheitselemente in Form von Prägehologrammen waren und sind beliebte optisch variable Echtheitssicherungsmittel. Inzwischen werden jedoch auch optisch variable Sicherheitselemente von Fälschern nachgeahmt, und zwar bisweilen in einer so guten Qualität, dass sie nicht ohne Weiteres als Fälschung zu erkennen sind.

Um eine weitergehende Echtheitsprüfung zu ermöglichen, ist bekannt, Hologramme und ähnliche Sicherheitselemente, die lichtreflektierende Oberflächen aufweisen, zumindest bereichsweise mit einer doppelbrechenden Schicht, einer sogenannten "Phasenverzögerungsschicht", zu versehen. Phasenverzögerungsschichten sind in der Lage, die Polarisation und Phase von hindurchgehendem Licht zu ändern. Der Grund ist, dass das Licht in zwei zueinander senkrecht stehende Polarisationsrichtungen zerlegt wird, die die Schicht mit unterschiedlicher Geschwindigkeit passieren, deren Phasen also gegeneinander verschoben werden. Die Verschiebung ist, abhängig von Art und Dicke der Schicht, unterschiedlich groß und wirkt sich unterschiedlich aus. Eine λ/4-Schicht, also eine Schicht, die das Licht in einer Richtung um eine Viertelwellenlänge gegen die dazu senkrechte Richtung verzögert, kann aus linear polarisiertem Licht zirkular oder elliptisch polarisiertes Licht machen und aus zirkular polarisiertem Licht wieder linear polarisiertes. Eine λ/2-Schicht, also eine Schicht, die das Licht in einer Richtung um eine halbe Wellenlänge gegen die dazu senkrechte Richtung verzögert, kann die Polarisationsrichtung von linear polarisiertem Licht drehen. Das Phänomen der Polarisierung sowie polarisierende Materialien sind bekannt.

Ein Sicherheitselement, das Polarisationseffekte zur Echtheitssicherung nutzt, ist beispielsweise in DE 10 2006 021 429 A1 beschrieben. Dieses Sicherheitselement besteht aus einem metallisierten Beugungshologramm, das in Teilbereichen mit einer Phasenverzögerungsschicht aus nematischem flüssigkristallinen Material versehen ist. Die Phasenverzögerungsschicht wird beispielsweise so gewählt, dass sie eine Phasenverzögerung von λ/4 bewirkt.

Bei Betrachtung unter Umgebungslicht sind die Bereiche mit Phasenverzögerungsschicht eines derartigen Sicherheitselements kaum wahrnehmbar, da die Phasenverzögerung auf alle Polarisationsrichtungen des einfallenden Lichts gleichermaßen wirkt. Deshalb wird von den Bereichen mit Phasenverzögerungsschicht und den Bereichen ohne Phasenverzögerungsschicht im Wesentlichen dieselbe Lichtmenge reflektiert.

Bei Betrachtung unter polarisiertem Licht werden die Bereiche mit Phasenverzögerungsschicht erkennbar. Beim Auflegen eines Zirkularpolarisators erscheinen die Bereiche mit Phasenverzögerungsschicht hell, die anderen Bereiche dunkel, wie in DE 10 2006 021 429 A1 beschrieben ist.

Wird ein Sicherheitselement mit bereichsweiser Phasenverzögerungsschicht durch einen Linearpolarisator betrachtet und der Linearpolarisator gedreht, durchlaufen die Bereiche mit Phasenverzögerungsschicht einen Hell/Dunkel-Wechsel, während die Bereiche ohne Phasenverzögerungsschicht unbeeinflusst bleiben.

Allgemein ausgedrückt: Lässt man auf ein Sicherheitselement mit einer lichtreflektierenden Oberfläche, die bereichsweise mit polarisierendem Material beschichtet ist, Licht durch einen Polarisator einfallen, wird das Licht in den beschichteten und unbeschichteten Bereichen mit unterschiedlicher Polarisierung reflektiert. Bei Betrachtung durch den Polarisator beobachtet man dadurch Hell/Dunkel-Kontraste.

Unerlässlich für die Erzielung guter optischer Effekte ist, dass die lichtreflektierende Oberfläche den Polarisationszustand des einfallenden Lichts nicht unkontrolliert verändert. Bei einer unkontrollierten Streuung können die Polarisationseffekte nicht mehr beobachtet werden. Daher werden bei Sicherheitselementen des Stands der Technik die lichtreflektierenden Oberflächen typischerweise von aufgedampften Metallisierungsschichten, beispielsweise durch physikalische Dampfabscheidung (PVD) oder chemische Dampfabscheidung (CVD) gebildeten Metallschichten, Schichten aus Metalleffektfarben oder anderen Schichten mit metallischer Reflexion, beispielsweise Schichten mit Interferenzpigmenten oder Dünnschichtelement-Schichten, gebildet. Bevorzugt werden metallisierte Beugungshologramme verwendet, wobei die Metallschicht in der Regel auf den Beugungsstrukturen aufgebracht ist.

Allen diesen für lichtreflektierende Schichten mit dem Charakter einer metallischen Reflexion bekannten Materialien ist gemeinsam, dass sie nicht in beliebigen Farben zur Verfügung stehen.

Bei den bekannten Sicherheitselementen sind aus aufgedampften Metallen oder Metalleffektfarben gebildete lichtreflektierende Schichten einfarbig, typischerweise silber- oder goldfarbig. Vielfarbige, komplexe Motive oder auch einfarbige Motive mit einer beliebigen gewünschten Farbe sind durch Aufdampfen von Metallen oder Aufdrucken von Metalleffektfarben nicht darstellbar. Mittels Dünnschichtelementen oder Interferenzpigmenten lässt sich zwar ein mehrfarbiges Schillern erzeugen, das allerdings über die gesamte beschichtete Fläche hinweg in gleicher Weise auftritt und nicht zur kontrollierten Darstellung definierter Muster bzw. Motive verwendet werden kann.

Nachteilig an den bekannten Sicherheitselementen ist auch, dass bei Betrachtung durch einen Linearpolarisator und Drehen des Polarisators die Polarisationseffekte ausschließlich in den Bereichen mit Phasenverzögerungsschicht zu beobachten sind.

Die EP 1189 079 A1 beschreibt ein Sicherheitselement mit einer reflektierenden Schicht, über der eine Phasenverzögerungsschicht angeordnet ist (siehe darin die Figuren 14 oder 16).

Die WO 02/085642 A2 beschreibt ein Dokument, z.B. eine Banknote, mit einem Substrat, einer reflektierenden Schicht und einer doppelbrechenden Schicht (siehe darin Seite 4, Zeile 22, bis Seite 5, Zeile 5).

Ausgehend von diesem Stand der Technik liegt der vorliegenden Erfindung die Aufgabe zugrunde, ein Sicherheitselement bereitzustellen, das sowohl mittels Polarisatoren prüfbare Echtheitsmerkmale als auch eine nach Wunsch wählbare Farbe aufweist.

Eine weitere Aufgabe der Erfindung ist es, ein derartiges Sicherheitselement bereitzustellen, das mehrere nach Wunsch wählbare Farben aufweist. Insbesondere soll durch die Farben ein mehrfarbiges Motiv gebildet und dadurch die Fälschungssicherheit erhöht werden können.

Eine weitere Aufgabe der Erfindung liegt darin, ein derartiges Sicherheitselement mit mehrfarbigem Muster bzw. Motiv bereitzustellen, wobei das mehrfarbige Motiv eine hohe Registergenauigkeit mit dem Motiv der Phasenverzögerungsschicht der Farben aufweist.

Darüber hinaus ist es eine Aufgabe der Erfindung, ein Sicherheitselement mit nach Wunsch wählbarer Farbe bzw. Farben bereitzustellen, bei dem vollflächig Polarisationseffekte beobachtbar sind.

Das Sicherheitselement sollte ferner als Transferelement ausbildbar sein.

Aufgabe der vorliegenden Erfindung ist es auch, ein Sicherheitspapier, einen Wertgegenstand, Verfahren zur Herstellung des Sicherheitselements, des Sicherheitspapiers und des Wertgegenstands, und ein Sicherheitselement-Transferband bereitzustellen. Eine weitere Aufgabe besteht in der Produktsicherung beliebiger Gegenstände.

Die Aufgabe wird gelöst durch das Sicherheitselement mit den Merkmalen des Hauptanspruchs. Ein Sicherheitspapier, ein Wertgegenstand, Verfahren zur Herstellung des Sicherheitselements, des Sicherheitspapiers und des Wertgegenstands sowie ein Transferband mit den erfindungsgemäßen Sicherheitselementen sind Gegenstand der nebengeordneten Ansprüche. Spezielle Ausführungsformen der Erfindung sind Gegenstand der abhängigen Ansprüche.

Das erfindungsgemäße Sicherheitselement weist eine reflektierende Schicht auf, d. h. eine Schicht, die elektromagnetische Strahlung, insbesondere Licht im für das menschliche Auge sichtbaren Wellenlängenbereich, reflektiert, und eine Phasenverzögerungsschicht, die Polarisationseffekte zeigt. Die Bereiche mit Phasenverzögerungsschicht bilden das "Polarisations-Merkmal" ("Pole-Merkmal") des Sicherheitselements, die reflektierende Schicht bildet den Hintergrund für das Pole-Merkmal.

Das erfindungsgemäße Sicherheitselement kann grundsätzlich aus denselben Materialien hergestellt werden wie die gattungsgemäßen Sicherheitselemente. Es kann auch grundsätzlich denselben Aufbau haben wie bekannte Sicherheitselemente mit optisch variablen Echtheitsmerkmalen, beispielsweise mit Schichten mit zusätzlichen visuell oder maschinell erkennbaren Echtheitsmerkmalen kombiniert werden.

Im Unterschied zu den bekannten Sicherheitselementen ist bei dem erfindungsgemäßen Sicherheitselement jedoch die reflektierende Schicht zumindest bereichsweise mittels mindestens eines Farbmittels gefärbt. Dabei bedeutet "gefärbt" im Sinne der vorliegenden Erfindung, dass die "gefärbten" Bereiche der reflektierenden Schicht für einen Betrachter eine oder mehrere Farben aufweisen, die sich von der Farbe der nicht "gefärbten" Bereiche der reflektierenden Schicht unterscheiden.

Wesentlich für die Erfindung ist demnach, dass ein Betrachter des erfindungsgemäßen Sicherheitselements für die gefärbten Bereiche der reflektierenden Schicht eine Farbe wahrnimmt, die zumindest bei Betrachtung unter einem speziellen Winkel und/oder speziellen Belichtungsverhältnissen von der Farbe der nicht gefärbten Bereiche der reflektierenden Schicht abweicht. Wie nachfolgend näher beschrieben wird, kann die Färbung der reflektierenden Schicht auf unterschiedliche Art und Weise realisiert werden. Insbesondere kann das Farbmittel in Bezug auf die reflektierende Schicht an verschiedenen Orten angeordnet werden, ohne dass das erfindungsgemäße Konzept verlassen wird. Farbmittel und reflektierende Schicht müssen erfindungsgemäß aber derart zusammenwirken, dass ein Betrachter zumindest in einem Teilbereich des Sicherheitselements eine gefärbte reflektierende Schicht wahrnimmt.

Farbmittel im Sinne der Erfindung sind Farbstoffe, d. h. in Lösungsmitteln und/oder Bindemitteln lösliche Farbmittel, sowie Pigmente, d. h. im Anwendungsmedium praktisch unlösliche Farbmittel. Glanzpigmente, wie Metalleffektpigmente, sowie Perlglanzpigmente, deren Farbton vom Betrachtungswinkel abhängt, oder andere Pigmente oder Materialien, die Licht spiegelnd reflektieren, also zur Erzeugung eines metallischen Reflexionscharakters geeignet sind, sind keine Farbmittel im Sinne der Erfindung. Sie können zwar zur Herstellung der reflektierenden Schicht verwendet werden, um deren reflektierenden Charakter zu erzeugen, stellen aber lediglich das Grundmaterial (eben das reflektierende Material) dar, das erfindungsgemäß gefärbt wird.

Die Tatsache, dass lichtreflektierende Schichten gefärbt werden können, ist insofern überraschend, als z. B. ein Überdecken lichtreflektierender Schichten mit einer Farbe oder ein Vermischen von Metalleffektpigmenten oder anderen lichtreflektierenden Pigmenten mit Farbmitteln an sich dazu führt, dass an der gefärbten Oberfläche Streueffekte auftreten. Streueffekte verhindern aber die kontrollierte Reflexion von eingestrahltem polarisiertem Licht und machen die gefärbte Schicht damit als einen Hintergrund für ein Pole-Merkmal ungeeignet.

Erfindungsgemäß wurde gefunden, dass durch Wahl geeigneter Farbmittel bzw. Farbmittelzusammensetzungen die kontrollierte Reflexion von polarisiertem Licht an der reflektierenden Schicht aufrechterhalten werden kann.

Die reflektierende Schicht wird aus Reflexionspartikelzusammensetzungen, d. h. aus Zusammensetzungen von reflektierenden Partikeln in einem Bindemittel oder Dispersionsmittel, z. B. Metalleffektfarben und Zusammensetzungen mit einschichtigen oder mehrschichtigen Interferenzpigmenten oder anderen Licht spiegelnd reflektierenden Pigmenten gebildet.

Die reflektierende Schicht wird darüber hinaus aus einem Reflexionsvollmaterial, wie einer Metallschicht oder einer Metalllegierungsschicht, einem Dünnschichtelement oder einer hochbrechenden Schicht aus beispielsweise CaS, CrO₂, ZnSi, TiO₂ oder SiO₂, gebildet.

Diese Schichten, nämlich eine bereichsweise vorgesehene reflektierende Schicht aus einer Reflexionspartikelzusammensetzung, die vollflächig oder bereichsweise mit einer reflektierenden Schicht aus Reflexionsvollmaterial beschichtet ist, werden kombiniert. Eine "Schicht" im Sinne der vorliegenden Erfindung ist nicht notwendigerweise durchgehend, sondern kann aus getrennten Einzelbereichen gebildet werden.

Für die Färbung dieser reflektierenden Schichten mit Farbmitteln bestehen, wie bereits vorstehend erwähnt, unterschiedliche Möglichkeiten.

Wird die reflektierende Schicht aus einem Reflexionsvollmaterial gebildet, beispielsweise aus einer PVD-Metallschicht (durch physikalische Dampfabscheidung abgeschiedenen Metallschicht), erfolgt die Färbung bevorzugt durch Beschichtung mit transparenten/transluzenten Lasurfarben bzw. durch Auftragen des Reflexionsvollmaterials auf eine Schicht aus transparenter/transluzenter Lasurfarbe. Die Reihenfolge, in der reflektierende Schicht und Farbmittelschicht angeordnet werden, hängt davon ab, auf welche Art der Aufbau des Sicherheitselements erfolgt. Bei dem fertigen, auf ein Wertdokument aufgebrachten Sicherheitselement, muss die Schicht mit transparenter Farbe dem Betrachter zugewandt sein.

Geeignete transparente/transluzente Lasurfarben enthalten lösliche Farbmittel oder geringe Anteile an feinkörnigen Pigmenten. Geeignet sind insbesondere die Farbstoffserie der Neozaponfarbstoffe von BASF und der Orasolfarbstoffe von Ciba. Ebenfalls geeignet sind die Zaponfarbstoffe von BASF und die Savinylfarbstoffe von Clariant. Diese Farben können alle im Druckverfahren, einem bevorzugten Aufbringungsverfahren, aufgetragen werden. Auf diese Weise können nicht nur beliebige Farben für den Hintergrund gewählt werden, sondern wie bei jedem Mehrfarbendruck, beliebige mehrfarbige Muster bzw. Motive aufgedruckt werden. Durch Überdrucken sind Mischfarben erzeugbar. Die Komplexität der darstellbaren Farben und Muster erhöht die Fälschungssicherheit ganz entscheidend.

Soll die Metallisierung nicht vollflächig erfolgen, sondern Aussparungen aufweisen, können derartige Aussparungen beispielsweise gebildet werden, indem bereichsweise eine sogenannte Waschfarbe aufgetragen wird, die Metallisierung dann über der Waschfarbe aufgetragen wird und die über der Waschfarbe liegenden Bereiche der Metallisierung dann entfernt werden, wie es in WO 99/13157 und WO 97/23357 beschrieben ist.

Alternativ zu der vorstehend beschriebenen Anordnung eines Farbmittels unmittelbar auf bzw. unter der reflektierenden Schicht kann das Farbmittel in Bezug auf die reflektierende Schicht auch beabstandet angeordnet sein. Denkbar ist z. B. eine Anordnung des Farbmittels in Form einer vorstehend beschriebenen transluzenten Lasurfarbe zwischen reflektierender Schicht und Phasenverzögerungsschicht, wobei zwischen reflektierender Schicht und Farbmittelschicht noch wenigstens eine (im Wesentlichen transparente) Hilfs- oder Zwischenschicht angeordnet ist. Das erfindungsgemäße Zusammenwirken von reflektierender Schicht und Farbmittel, das ein Betrachter des Sicherheitselements in Form einer gefärbten, reflektierenden Schicht wahrnimmt, kann grundsätzlich auch realisiert werden, wenn das Farbmittel aus Sicht des Betrachters vor der reflektierenden Schicht und zugleich vor der Phasenverzögerungsschicht angeordnet ist. Eine solche Ausführungsform kann z. B. dadurch realisiert werden, dass das Farbmittel in Form einer transluzenten Lasurfarbe auf der Phasenverzögerungsschicht, also aus Sicht des Betrachters vor der Phasenverzögerungsschicht, angeordnet wird. Auch in einem solchen Fall wird durch das Zusammenwirken von reflektierender Schicht und Farbmittel vom Betrachter zumindest bei Betrachtung unter einem speziellen Winkel und/oder speziellen Belichtungsverhältnissen eine zumindest bereichsweise gefärbte, reflektierende Schicht wahrgenommen, wobei diese Wahrnehmung von den weiter unten näher beschriebenen Effekten im Zusammenhang mit den Polarisationsmerkmal überlagert wird.

Wird die reflektierende Schicht aus einer Reflexionspartikelzusammensetzung gebildet, erfolgt die Färbung entweder in gleicher Weise wie bei dem Reflexionsvollmaterial mithilfe transluzenter Farben oder durch Einmischen geeigneter Farbmittel in die Reflexionspartikelzusammensetzung. Als Farbmittel kommen sowohl lösliche Farbstoffe als auch Pigmente infrage. Die gefärbte Reflexionspartikelzusammensetzung oder unterschiedlich gefärbte Reflexionspartikelzusammensetzungen oder auch Kombinationen von gefärbten und ungefärbten Reflexionspartikelzusammensetzungen können beispielsweise mittels Druckverfahren aufgetragen werden. Mehrfarbendruckverfahren sind dem Fachmann bekannt und ermöglichen bekanntermaßen die Erzeugung praktisch beliebig komplexer Motive in beliebigen gewünschten Farben. Durch die hohe Designfreiheit wird die Fälschungssicherheit beträchtlich erhöht.

Bevorzugte Reflexionspartikelzusammensetzungen sind Metalleffektfarben, d. h. Metallpigmente in einem Bindemittel-Lösungsmittel-Gemisch. Besonders bevorzugt sind die PVD-Aluminiumpigment-Zusammensetzungen der Firma Eckart (UltraStar). Ebenfalls geeignet sind die Aluminium-Flakes-Zusammensetzungen der Firma Eckart (RotoStar-Typen). Spezielle Beispiele sind die lösemittelbasierenden Tiefdruckfarben der UltraStar GX-Serie und der UltraStar GP-Serie, die Wasser-Flexo-Farben der UltraStar aqua-Serie, die kationisch härtenden UV-Flexofarben der UltraStar UV FP-82- und der UltraStar UV FP-83-Serie, die radikalisch härtenden UV-Flexofarben der PrismaStar UV FP-58-Serie und der UV SP-59-Serie, und die radikalisch härtenden UV-Flexofarben der RotoStar UV FP 60-Serie. Ein Beispiel für eine Reflexionspartikelzusammensetzung auf der Basis von Perlglanzpigmenten sind die radikalisch härtenden UV-Flexofarben der PearlStar UV FP 65-Serie der Firma Eckart. Denkbar sind ferner auch Effektpigment-Zusammensetzungen von SICPA, die mehrschichtige, insbesondere magnetisch ausrichtbare Effektpigmente enthalten, und Effektpigment-Zusammensetzungen gemäß der DE 195 01 307 A1. In dem zuletzt genannten Fall handelt es sich um Zusammensetzungen, die farbige Aluminiumpigmente enthalten.

Als Aluminium-PVD-Plättchen können z. B. die Metalure-Pigmente der Firma Eckart oder Metasheen-Pigmente der Firma Ciba eingesetzt werden. Lösungsmittelsysteme werden z. B. auf Basis von Nitrocellulose (NC, z. B. Hagedorn NC H 30, Walsroder A 400, Walsroder E 330) oder Polyvinylbutyral (PVB, z. B. Pioloform BL 16 von Wacker, Mowital B 18 S oder B 14 S von Kuraray) mit Lösungsmitteln (z. B. Ethanol, Isopropanol, Ethylacetat, Methoxypropanol), Coharzen (z. B. Polyurethanen, Acrylaten oder PVC-Copolymeren) und gegebenenfalls Additiven (zur Verbesserung von Haftung, Verlauf, Optik, Abrieb, etc.) formuliert. Wässrige Systeme können beispielsweise Systeme auf Polyurethan- oder Polyacrylat-Basis, UV- oder ESHvernetzbare Systeme können z. B. Systeme auf ungesättigter Acrylatbasis (radikalisch) oder Epoxid/Hydroxidbasis (kationisch) sein.

Diese Zusammensetzungen können eingefärbt werden mit unlöslichen Farbmitteln (Pigmenten) oder, bevorzugt, mit löslichen Farbmitteln, beispielsweise mit den oben im Zusammenhang mit der Färbung des Reflexionsvollmaterials genannten Farbmitteln.

Die Produkte der UltraStar GX-Serie und der UltraStar GP-Serie können vorteilhaft gefärbt werden mit den ebenfalls von der Firma Eckart erhältlichen Tonern TO-11 Orange, TY-21 Gelb, TY-22 Gelb, TR-33 Rot, TR-35 Rot, TR-34 Rot, TB-41 Blau, TV-61 Violett, TS-71 Schwarz. Zur Färbung der Produkte der UltraStar aqua-Serie besonders geeignete Toner sind WO-15 Orange, WY-25 Gelb, WR-35 Rot, WB-45 Blau, WG-55 Grün.

Die Menge an zugesetztem Toner hängt von dem gewünschten Farbton und dessen Intensität ab. Im Prinzip ist ein Anteil von 1 Gew.-% bis 99 Gew.-% möglich sowie Mischungen von Tonern, um den gewünschten Farbton zu erhalten. Da mit zunehmendem Torteranteil das Reflexionsvermögen sinkt, wird der Anteil an Toner bzw. Farbmittel möglichst gering gehalten. Spezielle Beispielzusammensetzungen sind:

### Blauer Farbton:

60 Gew.-% UltraStar GX-2807 Silber
40 Gew.-% UltraStar TB-41 Blau
oder:
70 Gew.-% UltraStar FP-4100 Aqua Silber
30 Gew.-% UltraStar Aqua Toner WB-45 Blau

### Goldener Farbton:

60 Gew.-% UltraStar GX-2807 Silber
35 Gew.-% UltraStar TY-21 Gelb
5 Gew.-% TR-35 Rot
oder
60 Gew.-% UltraStar GP-2150 Silber
35 Gew.-% UltraStar TY-21 Gelb
5 Gew.-% UltraStar TR-35 Rot

Die Abkürzungen G, F, P, X stehen dabei für das empfohlene Druckverfahren und das zur Bedruckung empfohlene Substrat: G = Gravur, F = Flexo, P = Papier, X = Folie.

Ein großer Vorteil der reflektierenden Schichten aus Reflexionspartikelzusammensetzungen besteht darin, dass sie auch in Form großer Flächen leicht in flexible Substrate, wie Banknoten, integrierbar sind. Reflektierende Flächen aus Reflexionsvollmaterial, wie Metallschichten, sind mit zunehmender flächiger Ausdehnung auch zunehmend schwierig in derartige Substrate zu integrieren.

Mit besonderem Vorteil werden die gefärbten reflektierenden Schichten auf Diffraktionsstrukturen von z. B. Hologrammen, aufgebracht. Sie erlauben die Erzeugung extrem schwer nachahmbarer, fein strukturierter Echtfarbenhologramme. Dabei wird die gefärbte, reflektierende Schicht (Reflexionspartikelzusammensetzung mit Farbmittel) direkt auf der Beugungsstruktur des Hologramms z. B. durch Aufdrucken angeordnet. Die Reflexionspartikel übernehmen dabei die Rolle einer vollflächigen Metallisierung, wodurch das Hologramm sichtbar bleibt. Das in der Reflexionspartikelzusammensetzung enthaltene Farbmittel bildet darüber hinaus einen gefärbten Hintergrund für die Phasenverzögerungsschicht. Da bei einem solchen Vorgehen mitunter die Beugungsstruktur unerwünschterweise "zugesetzt" und die Erkennbarkeit des Hologramms beeinträchtigt wird, kann die Beugungsstruktur eines Hologramms alternativ auch eine an sich bekannte (vollflächige) Metallisierung aufweisen. Die Färbung des für die Phasenverzögerungsschicht benötigten reflektierenden Hintergrunds wird dann z. B. durch eine transluzente Lasurfarbe erreicht, die zwischen Beugungsstruktur und Betrachter angeordnet wird. Wie vorstehend bereits erläutert, kann die Lasurfarbe in einem solchen Fall aus Sicht des Betrachters mit Vorteil hinter, grundsätzlich aber auch vor der Phasenverzögerungsschicht angeordnet sein.

Wie bereits erwähnt, wirkt die erfindungsgemäß gefärbte reflektierende Schicht mit der Phasenverzögerungsschicht zur Bildung des Pole-Merkmals zusammen. Bis auf diejenigen Ausführungsformen, bei denen das Farbmittel aus Sicht des Betrachters vor der Phasenverzögerungsschicht angeordnet ist, wird das Farbmittel aus Sicht des Betrachters ganz überwiegend hinter der Phasenverzögerungsschicht angeordnet sein. Demzufolge wird im Weiteren in der Regel von einem gefärbten "Hintergrund" für das Pole-Merkmal gesprochen. Von dem Begriff "Hintergrund" werden aber alle gefärbten reflektierenden Schichten im Sinne der Erfindung erfasst, also auch solche, bei denen das Farbmittel aus Sicht des Betrachters vor der Phasenverzögerungsschicht angeordnet ist.

Das Pole-Merkmal befindet sich in Blickrichtung des Betrachters vor bzw. über der reflektierenden Schicht, typischerweise mit einer Lackschicht (z. B. einer UV-Lackschicht) zwischen dem Pole-Merkmal und dem reflektierenden Hintergrund, wobei die Lackschicht dazu dient, einen besonders glatten Untergrund für die reflektierende Schicht bereitzustellen.

Geeignete Materialien zur Herstellung des Pole-Merkmals sind die bekannten doppelbrechenden Materialien des Stands der Technik. Bevorzugt sind nematische flüssigkristalline Materialien. Besonders bevorzugt sind doppelbrechende Schichten auf der Basis von UV-vernetzbaren Flüssigkristallen. Diese werden mit Vorteil als Lackschicht aufgedruckt, insbesondere im Tiefdruck, Siebdruck, Flexodruck, Knife- oder Curtain-Coating-Verfahren. Die Schichtdicke für die Anwendung als λ/4-Schicht liegt typischerweise zwischen 0,5 µm und 2 µm.

Das Pole-Merkmal bedeckt zumindest Teilbereiche des Hintergrunds und bildet, wie der Hintergrund, typischerweise ein beliebiges Muster bzw. Motiv, z. B. einen Schriftzug oder ein geometrisches Muster. Selbstverständlich kann die Phasenverzögerungsschicht aus Sicht des Betrachters aber auch vollflächig vor bzw. über der reflektierenden Schicht angeordnet sein, was z. B. in Verbindung mit einem fein strukturierten, farbigen Hintergrundmotiv aus einer gefärbten, reflektierenden Schicht von Vorteil ist. Ferner ist anzumerken, dass für den Fall einer durch Flüssigkristalle gebildeten Phasenverzögerungsschicht die Orientierung der Flüssigkristalle in verschiedenen Bereichen der Phasenverzögerungsschicht unterschiedlich sein kann. Insbesondere für den Fall einer vollflächigen Phasenverzögerungsschicht aus Flüssigkristallen können die Flüssigkristalle bereichsweise unterschiedliche Orientierungen aufweisen, was durch weiter unten beschriebene Aligrunentschichten in an sich bekannter Weise erreicht werden kann.

Mit den erfindungsgemäß gefärbten Hintergründen lassen sich interessante Kombinationsmotive von Hintergrund und Pole-Merkmal erzeugen. So kann ein Teil eines mehrfarbigen Gesamtmotivs als Hintergrund gedruckt werden, während der andere Teil mit Phasenverzögerungsmaterial aufgedruckt wird. So können mittels Betrachtung durch einen Polarisator jeweils Teile des Motivs hervorgehoben bzw. zum Verschwinden gebracht werden. Zur Herstellung derartiger Kombinationsmotive ist eine hohe Passergenauigkeit von Hintergrund-Teilmotiv und Pole-Teilmotiv erforderlich. Diese hohe Passergenauigkeit ist bei den erfindungsgemäßen Sicherheitselementen erzielbar, da sie in einem Arbeitsgang, d. h. in einem Maschinendurchgang, hergestellt werden können.

In seiner einfachsten Ausführungsform besteht das erfindungsgemäße Sicherheitselement aus einer Trägerfolie, einem Pole-Merkmal auf der Trägerfolie und einer gefärbten reflektierenden Schicht als Hintergrund, wobei zuerst das Pole-Merkmal auf die Trägerfolie aufgebracht wird, und darauf dann die reflektierende Schicht aufgebracht wird. Bei dieser Ausführungsform erfolgt die Verbindung mit einem Zielsubstrat (z. B. einem Wertdokument) mittels einer auf die reflektierende Schicht aufzutragenden Klebstoffschicht. Die Trägerfolie kann nach der Übertragung auf das Zielsubstrat gegebenenfalls abgezogen werden. Zwischen dem Pole-Merkmal und der reflektierenden Schicht wird bevorzugt eine Lackschicht vorgesehen, um einen glatten Untergrund für die reflektierende Schicht zu schaffen. Diese Lackschicht kann gleichzeitig als Prägelackschicht und/oder als Transferhilfsschicht dienen, wie später noch ausgeführt werden wird.

Eine weitere Variante besteht darin, eine Trägerfolie mit einer gefärbten reflektierenden Schicht zu versehen, darauf das Pole-Merkmal aufzutragen, und dieses wiederum durch eine geeignete Schutzschicht, beispielsweise eine UV-Lackschicht, zu schützen. In diesem Falle würde das Sicherheitselement mit der Trägerfolie auf ein Zielsubstrat aufgeklebt werden. Diese Variante ist gegenüber der erstgenannten Ausführungsform weniger bevorzugt, da das Pole-Merkmal bevorzugt durch flüssigkristalline Materialien gebildet wird, die bei der Auftragung auf die reflektierende Schicht eine geeignete Alignment-Schicht benötigen. Dadurch wird das Herstellungsverfahren beträchtlich erschwert.

Gemäß einer weiteren Variante kann das erfindungsgemäße Sicherheitselement aus einem ersten Schichtaufbau und einem zweiten Schichtaufbau zusammengesetzt werden, wobei der erste Schichtaufbau das Pole-Merkmal auf einer Trägerschicht aufweist, und der zweite Schichtaufbau die gefärbte reflektierende Schicht auf einer Trägerschicht aufweist. Die beiden Schichtaufbauten werden dann mittels einer Klebstoffschicht so miteinander verbunden, dass das Pole-Merkmal und die reflektierende Schicht einander zugewandt sind. Bei dieser Variante kann keine so gute Passergenauigkeit zwischen Pole-Merkmal und Hintergrund erzielt werden wie bei der erstgenannten Ausführungsform.

Bei allen Ausführungsformen ist die den Hintergrund bildende reflektierende Schicht erfindungsgemäß mittels eines Farbmittels gefärbt. Erfolgt die Färbung durch Überdrucken der reflektierenden Schicht mit einer transluzenten Farbe, so ist die transluzente Farbe so aufzudrucken, dass sie aus Sicht des Betrachters vor der reflektierenden Schicht, bevorzugt zwischen Pole-Merkmal und reflektierender Schicht, angeordnet ist.

Das bevorzugte Herstellungsverfahren des erfindungsgemäßen Sicherheitselements mit gefärbter reflektierender Schicht ist ein Verfahren, bei dem in einem Maschinendurchgang sowohl das Pole-Merkmal als auch die gefärbte reflektierende Schicht aufgetragen werden kann und somit eine hervorragende Passergenauigkeit zwischen Pole-Merkmal und Hintergrund erzielt werden kann, wodurch Kombinationsmotive von Pole-Merkmal und Hintergrund ermöglicht werden.

Das Verfahren weist folgende Schritte auf:
- Bereitstellen einer Trägerfolie,
- Aufbringen einer Phasenverzögerungsschicht auf wenigstens einen Teilbereich der Trägerfolie oder vollflächig auf die Trägerfolie,
- Aufbringen, bevorzugt vollflächig, einer Lackschicht zur Erzeugung einer glatten Oberfläche für die reflektierende Schicht,
- Bilden der reflektierenden Schicht durch
   - (a) Aufbringen einer mittels mindestens eines Farbmittels gefärbten Reflexionspartikelzusammensetzung oder aus mehreren Reflexionspartikelzusammensetzungen unterschiedlicher Farbe mindestens auf einen Teilbereich der Lackschicht,
      oder
   - (b) Aufbringen einer Schicht aus einer mindestens ein Farbmittel enthaltenden transluzenten Farbe oder aus mehreren unterschiedlichen transluzenten Farben mindestens auf einen Teilbereich der Lackschicht, und anschließend Aufbringen einer Schicht aus einer oder mehreren gefärbten oder ungefärbten Reflexionspartikelzusammensetzungen oder einer Schicht aus Reflexionsvollmaterial mindestens auf einen Teilbereich der Schicht aus transluzenter Farbe.

Die beiden Alternativen (a) und (b) können auch kombiniert werden. Beispielsweise können zuerst Teilbereiche der Lackschicht mit einer gefärbten Reflexionspartikelzusammensetzung oder mehreren gefärbten Reflexionspartikelzusammensetzungen beschichtet werden, dann eine Schicht aus einer transluzenten Farbe oder aus mehreren transluzenten Farben aufgetragen werden, wobei der Auftrag vollflächig oder wiederum nur auf Teilbereiche erfolgen kann, und schließlich eine weitere Schicht aus gefärbten oder ungefärbten Reflexionspartikelzusammensetzungen oder aus Reflexionsvollmaterial aufgetragen werden, wiederum vollflächig oder nur in Teilbereichen.

Wie bereits erwähnt, kann das Farbmittel in Form einer transluzenten Farbe (grundsätzlich) auch in einem Abstand von der reflektierenden Schicht, z. B. aus Sicht des Betrachters vor bzw. über der Phasenverzögerungsschicht angeordnet werden. Es versteht sich, dass das vorstehend beschriebene Verfahren zur Herstellung der gegenwärtig bevorzugten Ausführungsformen entsprechend modifiziert werden muss, um die gegenwärtig nicht bevorzugten Ausführungsformen mit z. B. Farbmittel auf der Phasenverzögerungsschicht herzustellen.

Verschiedene Farben der Schicht aus Reflexionspartikelzusammensetzungen können nicht nur durch Verwendung von Reflexionspartikelzusammensetzungen erzielt werden, die mit unterschiedlichen Farbmitteln gefärbt sind, sondern auch durch Verwendung verschiedener Arten von Reflexionspartikelzusammensetzungen, beispielsweise Metalleffektfarben in Kombination mit Interferenzpigmentzusammensetzungen.

Zur Übertragung des Sicherheitselements auf ein Zielsubstrat, d. h. einen zu sichernden Wertgegenstand, wird eine Klebstoffschicht auf die oberste Schicht des Sicherheitselements aufgetragen und das Sicherheitselement mit dem Wertgegenstand verklebt. Die zum Verkleben mit dem Wertgegenstand vorgesehene Schicht braucht dabei nicht die reflektierende Schicht zu sein. Vielmehr können auf dieser Schicht weitere funktionelle Schichten, Hilfsschichten und/ oder Schutzschichten vorgesehen sein.

Gemäß einer bevorzugten Ausführungsform des erfindungsgemäßen Verfahrens wird die reflektierende Schicht gebildet durch
- Aufbringen einer Schicht aus einer mittels mindestens eines Farbmittels gefärbten Reflexionspartikelzusammensetzung oder mehrerer Reflexionspartikelzusammensetzungen verschiedener Farbe mindestens auf einen Teilbereich der Lackschicht,
- gegebenenfalls Aufbringen einer Schicht aus einer mindestens ein Farbmittel enthaltenden transluzenten Farbe oder aus mehreren verschiedenen transluzenten Farben mindestens auf einen Teilbereich der Lackschicht bzw. der Schicht aus Reflexionsmittelpartikelzusammensetzung(en), und
- Aufbringen einer Schicht aus Reflexionsvollmaterial, bevorzugt auf der gesamten Fläche der darunterliegenden Schicht.

Als Trägerfolie wird bevorzugt eine glatte Folie mit guter Oberflächenqualität verwendet. Beispiele für Kunststoff-Trägerfolien sind Folien aus PET, OPP, BOPP, PE und Celluloseacetat. Einige Kunststofffolien haben aufgrund ihrer inneren Struktur die Eigenschaft, dass sie flüssigkristallines Material ausrichten. So können flüssigkristalline Materialien auf einfache Weise, ohne separat vorgesehene Alignmentschicht, ausgerichtet werden. Da bei den erfindungsgemäßen Sicherheitselementen flüssigkristalline Materialien als Phasenverzögerungsschicht bevorzugt sind, werden bevorzugt speziell für die Ausrichtung von Flüssigkristallen ausgelegte Folien als Trägerfolien verwendet. Alternativ kann die Trägerfolie auch mit einer Alignmentschicht für die Ausrichtung von Flüssigkristallen ausgestattet werden. Als Alignmentschicht kommt insbesondere eine Schicht aus einem linearen Photopolymer, eine fein strukturierte Schicht, d. h. eine Schicht mit ausrichtungsfördernder Oberflächentopographie, oder eine durch Ausübung von Scherkräften ausgerichtete Schicht infrage. Eine geeignete fein strukturierte Schicht kann beispielsweise durch Prägen, Ätzen oder Einritzen hergestellt werden.

Um einen brillanten Farbeindruck und die erforderliche spiegelnde Oberfläche der gefärbten reflektierenden Schicht zu erreichen, benötigt diese einen sehr glatten Untergrund, und daher wird vor dem Aufbringen der reflektierenden Schicht auf die Phasenverzögerungsschicht bevorzugt eine Lackschicht, insbesondere eine UV-Lackschicht, vorgesehen. Auf die Lackschicht kann unter Umständen verzichtet werden, wenn die Färbung des Hintergrunds, d. h. der reflektierenden Schicht, durch eine Schicht aus transluzenter Farbe erfolgt; bevorzugt wird sie jedoch auch in diesem Fall vorgesehen. Insbesondere kann diese Lackschicht nämlich, außer einen glatten Untergrund für die reflektierende Schicht bereitzustellen, weitere Zwecke erfüllen. Beispielsweise können in sie Beugungsstrukturen eingeprägt werden, wie zur Erzeugung von Hologrammen, Kinegrammen, etc.

Die Kombination der erfindungsgemäß gefärbten reflektierenden Schicht mit einer Beugungsstruktur, wie einem Hologramm, ist eine besonders bevorzugte Ausführungsform der vorliegenden Erfindung. Dazu wird. auf der Phasenverzögerungsschicht eine Lackschicht aufgetragen und in die Lackschicht (nach Trocknung oder Härtung, je nach Art der Lackschicht) eine Beugungsstruktur eingeprägt. Auf der Prägung wird dann die gefärbte reflektierende Schicht ausgebildet, wie vorstehend angegeben. Beispielsweise werden Teilbereiche der geprägten Lackschicht mit einer gefärbten Reflexionspartikelzusammensetzung oder gefärbten Reflexionspartikelzusammensetzungen beschichtet und darauf eine Schicht aus einem Reflexionsvollmaterial, beispielsweise eine PVD-Metallisierung, aufgebracht.

Nach dem Verbinden des Sicherheitselements mit einem Wertgegenstand, beispielsweise durch Aufkaschieren, und Abziehen der Trägerfolie, ergeben sich für einen Betrachter unterschiedliche Ansichten, je nach Art der zur Färbung der Reflexionspartikelzusammensetzung(en) verwendeten Farbmittel-zusammensetzung(en). Bei Betrachtung ohne Polarisator ist das Pole-Merkmal kaum zu erkennen. Das Hologramm ist in jedem Fall in den Bereichen der Beugungsstruktur, die ausschließlich mit Reflexionsvollmaterial beschichtet sind, deutlich erkennbar, da das Reflexionsvollmaterial der Prägestruktur folgt. In den mit gefärbter Reflexionspartikelzusammensetzung beschichteten Bereichen der Beugungsstruktur ist das Hologramm nur dann sichtbar, wenn zur Färbung eine Farbmittel-Zusammensetzung verwendet wird, die kein Bindemittel oder ein Bindemittel mit einem Brechungsindex, der sich von dem Brechungsindex der Prägelackschicht deutlich unterscheidet, enthält. Wird hingegen eine Farbmittel-Zusammensetzung verwendet, die ein Bindemittel mit einem Brechungsindex enthält, der dem Brechungsindex des Prägelacks ähnlich ist, ist in den betreffenden Bereichen die Beugungsstruktur, und damit das Hologramm, für einen Betrachter nicht mehr zu erkennen. Bei Betrachtung des Sicherheitselements durch einen Polarisator wird das Pole-Merkmal über allen Bereichen der reflektierenden Schicht sichtbar, unabhängig davon, welche Farbe zur Färbung der Reflexionspartikel-Zusammensetzung(en) verwendet wurde, vorausgesetzt, der Charakter der metallischen Reflexion bleibt durch die Färbung erhalten.

Alternativ oder zusätzlich zu ihrer Verwendung als Prägelackschicht kann die Lackschicht zwischen Pole-Merkmal und reflektierender Schicht auch als Transferhilfsschicht Anwendung finden. Sicherheitselemente mit Transferhilfsschichten, ihre Herstellung und Übertragung auf Wertgegenstände, bzw. die Kombination von Teil-Schichtaufbauten zu vielschichtigen Sicherheitselementen mit mehreren Effektschichten (funktionellen Schichten) unter Nutzung einer Transferhilfsschicht und gegebenenfalls einer Releaseschicht sind in WO 2005/108108 A2 offenbart. Die dort beschriebenen Materialien und Techniken sind völlig analog bei den erfindungsgemäßen Sicherheitselementen mit gefärbter reflektierender Schicht anwendbar.

Bei der Herstellung der erfindungsgemäßen Sicherheitselemente aus zwei oder mehr Teil-Schichtaufbauten geht man folgendermaßen vor: Als ein erster Schichtaufbau wird auf einer Trägerfolie, beispielsweise einer PET-Folie, das Pole-Merkmal vorbereitet, indem eine Phasenverzögerungsschicht auf einen Teilbereich oder auf mehrere Teilbereiche der Trägerfolie aufgebracht und darauf eine Transferhilfsschicht aufgetragen wird. Die Transferhilfsschicht kann beispielsweise aus einer Lackschicht bestehen, die zu der Trägerfolie eine geringere Haftung aufweist als zu der Phasenverzögerungsschicht. Auf der Transferhilfsschicht wird eine Klebeschicht zur Verklebung mit dem zweiten Schichtaufbau aufgebracht. Der zweite Schichtaufbau wird auf einer zweiten Trägerfolie vorbereitet, indem auf die zweite Trägerfolie eine Lackschicht aufgebracht und in die Lackschicht gegebenenfalls eine Beugungsstruktur eingeprägt wird. Darauf wiederum wird die gefärbte reflektierende Schicht aufgebracht, wie vorstehend beschrieben. Dann wird der zweite Teil-Schichtaufbau mithilfe der Klebeschicht auf den ersten Schichtaufbau aufkaschiert.

Werden weitere funktionelle Schichten gewünscht, kann beispielsweise die zweite Trägerfolie beidseitig mit funktionellen Schichten ausgestattet werden. So kann beispielsweise auf der freien Oberfläche der zweiten Trägerfolie eine maschinell prüfbare Schicht vorgesehen werden, beispielsweise eine Magnetschicht. Zusätzlich kann auf einer dritten Trägerfolie ein dritter Teil-Schichtaufbau vorbereitet werden. Dazu wird beispielsweise auf einer dritten Trägerfolie eine vollflächige Metallschicht aufgebracht. Die Metallschicht wird wiederum mit einer Klebeschicht versehen, mit deren Hilfe der dritte Teil-Schichtaufbau mit dem zweiten Teil-Schichtaufbau verklebt wird.

Für den Transfer auf ein Zielsubstrat wird eine Klebeschicht, beispielsweise ein Heißsiegelkleber, auf die dritte Trägerfolie aufgebracht und das Sicherheitselement mit dem Zielsubstrat verklebt. Die erste Trägerfolie kann nach oder während der Übertragung auf das Zielsubstrat abgezogen werden und die Oberfläche des Sicherheitselements gegebenenfalls durch eine oder mehrere Schutzschichten geschützt werden.

Das Herstellungsverfahren des erfindungsgemäßen Sicherheitselements aus mehreren Teil-Schichtaufbauten ermöglicht keine so gute Passergenauigkeit von Hintergrundmotiv und Pole-Motiv wie das gemeinsame Verdrucken in einem Maschinendurchgang. Die Technik kann dennoch vorteilhaft sein, insbesondere wenn es auf eine hohe Passergenauigkeit weniger ankommt.

Vorstehend wurde die Kombination eines erfindungsgemäßen Pole-Merkmals vor gefärbtem Hintergrund mit einer Magnetschicht als zusätzliche funktionelle Schicht beschrieben. Neben magnetischen Schichten/Codierungen können die erfindungsgemäßen Sicherheitselemente auch andere funktionelle Schichten, alleine oder in Kombination, enthalten, beispielsweise elektrisch leitende und/oder lumineszierende Schichten, Aufdrucke, Negativschriften, etc. Beispielhafte Kombinationen sind beschrieben in WO 2005/108108 A2.

Mit besonderem Vorteil können die erfindungsgemäß gefärbten reflektierenden Schichten in sogenannten LEAD (Longlasting Economical Anticopy Device)-Sicherheitselementen Anwendung finden. Derartige Sicherheitselemente haben einen Schichtaufbau mit zahlreichen funktionellen Schichten, unter anderem mit einem holographischen Sicherheitsmerkmal, Druckannahme-, Schutz- und Kaschierschichten, Farbschichten, fluoreszierenden Aufdrucken, etc. Die Verklebung mit einem Zielsubstrat, wie einem Wertdokument oder beliebigen anderen Papieren und Folien, erfolgt typischerweise durch Heißsiegeln. Sogenannte L-LEAD-Sicherheitselemente weisen eine Trägerfolie auf und werden bevorzugt bei Substraten mit Öffnungen zur Abdeckung der Öffnung verwendet. Sogenannte T-LEAD-Sicherheitselemente weisen keine Trägerfolie auf, sind aber ansonsten mit den L-LEAD-Sicherheitselementen identisch. Sie werden in der Regel in einem Bereich auf das Substrat aufgebracht, der im Wesentlichen keine Öffnung aufweist. In den LEAD-Sicherheitselementen ist das erfindungsgemäße Sicherheitsmerkmal, das Pole-Merkmal vor gefärbtem Hintergrund, innerhalb des vielschichtigen Aufbaus natürlich so anzuordnen, dass es von anderen funktionellen Schichten im Wesentlichen nicht verdeckt wird.

Den bisher geschilderten Ausführungsformen des erfindungsgemäßen Sicherheitselements ist gemeinsam, dass der nicht mit dem Pole-Merkmal bedeckte Teil der reflektierenden Schicht bei Betrachtung durch einen Linearpolarisator und Drehen des Linearpolarisators im Wesentlichen keine Veränderung zeigt. Dieser gelegentlich als Nachteil empfundenen Tatsache kann abgeholfen werden, indem das Sicherheitselement an der dem Betrachter zugewandten Oberfläche mit einer anisotropen Folie ausgestattet wird.

Viele Kunststofffolien sind anisotrope Materialien und weisen eine je nach eingestrahlter Wellenlänge unterschiedliche Doppelbrechung auf. Auch einige Trägerfolien, wie sie gerne zum Aufbau der erfindungsgemäßen Sicherheitselemente verwendet werden, sind optisch anisotrop, beispielsweise PET-Folien, die Farbeffekte zeigen, wenn man sie zwischen gekreuzte lineare Polarisationsfilter hält. Ein echtes Abschatten, d. h. ein ausgeprägter Hell/Dunkel-Kontrast (Schwarz/Weiß-Kontrast) ist mit derartigen Folien jedoch nicht möglich. Bei bestimmten Folien allerdings ist der Polarisationseffekt so ausgeprägt, dass er zur Erzeugung von Hell/Dunkel-Kontrasten genutzt werden kann. Eine solche Folie ist beispielsweise eine Folie aus orientiertem Polypropylen (OPP).

Gemäß einer Variante der vorliegenden Erfindung werden die Sicherheitselemente mit einer derartigen Folie ganzflächig bedeckt, so dass sowohl das Pole-Merkmal als auch der Hintergrund ohne Pole-Merkmal von Folie bedeckt sind. Dadurch addieren sich im Bereich des Pole-Motivs die Doppelbrechung der Phasenverzögerungsschicht und die Doppelbrechung der Folie (abhängig von der Orientierung der Folie), während in den übrigen Bereichen lediglich die Doppelbrechung der Folie vorliegt. Bei Betrachtung des Sicherheitselements durch einen Linearpolarisatior und Drehung des Polarisators ist auch in den Hintergrund-Bereichen ohne Phasenverzögerungsschicht ein Pole-Effekt zu beobachten, und in den Bereichen mit Phasenverzögerungsschicht tritt ein besonders ausgeprägter Pole-Effekt, ein praktisch perfekter Schwarz/ Weiß-Kontrast, auf.

Die Kombination von Sicherheitselementen mit Pole-Merkmal mit polarisierenden Folien ist besonders vorteilhaft und eindrucksvoll bei den erfindungsgemäßen Sicherheitselementen mit gefärbter reflektierender Schicht einsetzbar. Grundsätzlich ist sie jedoch auch bei Sicherheitselementen mit nicht gefärbter reflektierender Schicht einsetzbar, d. h. die Ausstattung von Sicherheitselementen mit Pole-Merkmal über einer reflektierenden Schicht mit einer polarisierenden Folie stellt eine selbständige Erfindung dar.

Das erfindungsgemäße Sicherheitselement wird bevorzugt in Form von Transferbändern mit einer Vielzahl von als Transferelement ausgebildeten Sicherheitselementen bereitgestellt. Transferelemente und Transferelement-Bänder sind an sich bekannt. Kennzeichnend für Transferbänder ist, dass die Sicherheitselemente auf einer Trägerschicht mit einem Schichtaufbau in umgekehrter Schichtfolge, wie sie später auf dem schützenden Gegenstand vorliegen soll, vorbereitet werden. Die Trägerschicht wird nach dem Transfer typischerweise von dem Schichtaufbau des Sicherheitselements abgezogen, kann aber auch als Schutzschicht auf dem Sicherheitselement verbleiben. Auf der der Trägerschicht entgegengesetzten Seite weisen die Transferbänder eine Klebeschicht, typischerweise aus einem Heißsiegelklebstoff, auf. Das Transferband wird mit der Heißsiegelklebeschicht auf ein Zielsubstrat aufgelegt und mittels eines beheizten Transferstempels oder einer Transferrolle angepresst und in der Umrissform des erhitzten Transferstempels auf das Zielsubstrat übertragen. Anstelle der Formgebung der Transferelemente durch den Transferstempel können die einzelnen Transferelemente auf dem Transferband jedoch bereits in der gewünschten Umrissform vorgefertigt werden. Transferelemente, Transferbänder und die Übertragung von Transferelementen auf Zielsubstrate ist grundsätzlich bekannt. Es wird dazu z. B. auf die WO 2005/108108 A2 verwiesen.

Das erfindungsgemäße Sicherheitselement kann beliebige Formen und an sich auch beliebige Größen haben. In bevorzugten Ausgestaltungen hat es die Form eines Sicherheitsbandes, eines Sicherheitsstreifens, eines Etiketts, eines Folienpatches oder eines sonstigen flächigen Sicherheitselements. Die Abmessungen werden wesentlich von dem zu schützenden Gegenstand mitbestimmt. Bevorzugt weist das Sicherheitselement eine Dicke von 1 µm bis 100 µm, besonders bevorzugt eine Dicke von 2 µm bis 50 µm, auf. Dabei handelt es sich um die bei der Ausstattung von Wertdokumenten und Sicherheitspapieren mit Sicherheitselementen leicht handhabbaren Dicken der Sicherheitselemente. Flächenmäßig sind in der Regel Formate von einigen mm² bis einigen cm² oder größer sinnvoll.

Die vorliegende Erfindung umfasst auch ein Wertdokument, wie eingangs definiert, sowie ein Sicherheitspapier zur Herstellung eines derartigen Wertdokuments, das mit dem erfindungsgemäßen Sicherheitselement ausgestattet ist. Als Substratmaterial für das Sicherheitspapier kommt jede Art von Papier in Betracht, insbesondere Baumwoll-Velinpapier. Selbstverständlich kann auch Papier eingesetzt werden, das einen Anteil x an polymeren Material enthält, wobei x zwischen 0 und 100 Gew.-% liegen kann.

Das Substratmaterial des Sicherheitspapiers bzw. allgemein des Wertdokuments kann auch eine Kunststofffölie, wie etwa eine Polyesterfolie, sein. Die Folie kann monoaxial oder biaxial gereckt sein. Eine Reckung der Folie führt unter anderem dazu, dass sie lichtpolarisierende Eigenschaften erhält, die als weitere Sicherheitsmerkmale genutzt werden können. Das Substratmaterial kann auch ein mehrschichtiger Verbund sein, der wenigstens eine Schicht aus Papier oder einem papierähnlichen Material enthält. Ein solcher Verbund, der als Substratmaterial für Wertdokumente eingesetzt werden kann, zeichnet sich durch eine außerordentlich große Stabilität aus, die für die Haltbarkeit des Wertdokuments von großem Vorteil ist.

Als Substratmaterial kann ferner ein mehrschichtiges, papierfreies Kompositmaterial eingesetzt werden, das insbesondere in manchen Klimaregionen der Erde mit Vorteil eingesetzt werden kann.

Alle Substratmaterialien können Zusatzstoffe enthalten, die als Echtheitsmerkmale dienen können. Dabei kommen insbesondere Lumineszenzstoffe infrage, die im sichtbaren Wellenlängenbereich vorzugsweise transparent sind und in einem nicht sichtbaren Wellenlängenbereich durch geeignete Hilfsmittel, wie etwa eine UV- oder IR-Strahlung emittierende Quelle, angeregt werden können, um eine direkt sichtbare oder mit Hilfsmitteln nachweisbare Lumineszenzstrahlung zu erzeugen.

Als Substratmaterial kommen des Weiteren alle opaken Materialien, insbesondere aber transparente oder transluzente Folien, infrage. In diesem Fall kann das Sicherheitselement mit Vorteil in oder über einem Fensterbereich oder einer durchgehenden Öffnung eines Wertdokuments als sogenanntes "Durchsichtssicherheitselement" verwendet werden.

Eine Öffnung in einem Sicherheitspapier oder papierenen Wertdokument kann bereits bei der Herstellung des Sicherheitspapiers oder Wertdokuments erzeugt werden und weist dann einen faserigen, unregelmäßigen Rand auf. Ein solcher Rand ist charakteristisch für bereits bei der Blattbildung hergestellte Öffnungen und kann nicht nachträglich erzeugt werden. Einzelheiten zur Herstellung derartiger unregelmäßiger Ränder können der Druckschrift WO 03/054297 A2 entnommen werden. In anderen Ausgestaltungen wird die Öffnung erst nach der Papierherstellung durch Stanzen oder Schneiden, beispielsweise durch Laserstrahlschneiden erzeugt.

Um eine gute Sichtbarkeit des Pole-Effekts zu gewährleisten, wird das erfindungsgemäße Sicherheitselement bevorzugt vollflächig an der Oberfläche des Sicherheitspapiers bzw. Wertdokuments angebracht. Auch eine teilweise Einbettung des Sicherheitselements in das Substratmaterial des zu sichernden Gegenstands kann sinnvoll sein, insbesondere dann, wenn es sich um ein Sicherheitselement mit Trägersubstrat handelt, das nur in Teilbereichen mit der erfindungsgemäß gefärbten reflektierenden Schicht ausgestattet ist. Die übrigen Teilbereiche des Trägersubstrats können entweder frei von Echtheitsmerkmalen sein oder zusätzliche Echtheitsmerkmale, beispielsweise maschinell nachweisbare Echtheitsmerkmale, aufweisen. Derartige Bereiche können ohne Weiteres ganz oder teilweise von Wertgegenstand-Substratmaterial bedeckt werden.

Es versteht sich, dass das erfindungsgemäße Sicherheitselement auch direkt auf dem vorgesehenen Zielsubstrat, z. B. auf eine Papierbanknote oder Polymerbanknote bzw. auf den jeweiligen Mehrnutzenbogen, angeordnet werden kann. In einem solchen Fall entfällt der vorstehend beschriebene Transfer des im Wesentlichen fertigen Sicherheitselements von z. B. einem Transferband auf das Wertdokument.

Neben der Verwendung zur Herstellung von Sicherheitspapieren und Wertdokumenten sind die erfindungsgemäßen Sicherheitselemente ganz allgemein zur Produktsicherung von Waren jeglicher Art geeignet, beispielsweise zur Kennzeichnung von Markenartikeln oder Verpackungen.

Die vorliegende Erfindung wird nachfolgend anhand von Figuren noch weiter veranschaulicht. Es wird darauf hingewiesen, dass die Figuren nicht maßstabs- und proportionsgetreu sind. Ferner sind im Zusammenhang mit einer bestimmten Figur beschriebene Merkmale nicht auf die in der dargestellten Ausführungsform beschriebene Merkmalskombination beschränkt. sondern allgemein auf die erfindungsgemäßen Sicherheitselemente anwendbar, d. h., die im Zusammenhang mit speziellen Ausführungsformen beschriebenen Merkmale können untereinander in beliebiger Weise, sofern technisch sinnvoll, kombiniert werden.

In den in den Figuren beschriebenen speziellen Ausführungsformen wird von nematischem Flüssigkristallmaterial, Metallschichten und Metalleffektfarben gesprochen. Gemäß der vorliegenden Erfindung besteht die Phasenverzögerungsschicht bevorzugt aus nematischem Flüssigkristallmaterial (LCN), die Schicht aus Reflexionsvollmaterial ist bevorzugt eine Metallschicht, insbesondere eine durch physikalische Dampfabscheidung abgeschiedene Metallschicht, und die Reflexionspartikel der Reflexionspartikelzusammensetzungen sind bevorzugt Metalleffektpartikel. In den Figuren werden also die bevorzugten Materialien angegeben, was jedoch nicht beschränkend zu verstehen ist. Die bevorzugten Materialien sind lediglich stellvertretend für die allgemeinen Begriffe genannt.

Es zeigen:
- Fig. 1: eine schematische Darstellung eines Sicherheitselements (Vergleichsbeispiel) mit Kombinationsmotiv aus farbigem Hintergrund und Pole-Merkmal, wobei Fig. 1a eine Darstellung in Aufsicht und Fig. 1b eine Darstellung im Querschnitt ist,
- Fig. 2: eine schematische Darstellung eines erfindungsgemäßen Sicherheitselements ähnlich Fig. 1, aber mit Hologrammstruktur und zusätzlicher vollflächiger Metallisierung, im Querschnitt,
- Fig. 3: eine schematische Darstellung der Herstellung eines Sicherheitselements (Vergleichsbeispiel) aus zwei Schichtaufbauten, wobei Fig. 3a den ersten und Fig. 3b den zweiten Schichtaufbau vor dem Kaschieren und Fig. 3c das fertige Sicherheitselement, jeweils im Querschnitt, zeigt,
- Fig. 4: eine schematische Darstellung eines Sicherheitselements (Vergleichsbeispiel) im Querschnitt,
- Fig. 5: eine schematische Darstellung einer weiteren Ausführungsform eines erfindungsgemäßen Sicherheitselements mit weiteren funktionellen Schichten im Querschnitt,
- Fig. 6: eine schematische Darstellung eines erfindungsgemäßen Sicherheitselements ähnlich Fig. 5, aber mit zusätzlicher polarisierender Folie,
- Fig. 7: die Übertragung des Sicherheitselements von Fig. 2 auf ein Zielsubstrat.

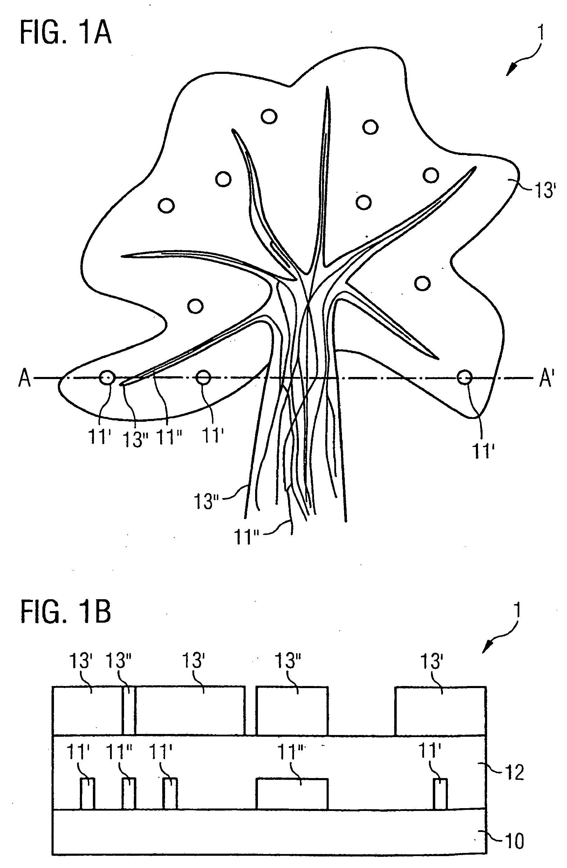

Die in den Figuren 1a, 1b, 3 und 4 gezeigten Ausführungsformen fallen nicht unter die vorliegenden Ansprüche, dienen aber dem Verständnis der Erfindung.

Fig. 1a zeigt ein Sicherheitselement 1 in Aufsicht. Das Sicherheitselement weist die Darstellung eines Baumes mit einer Krone, einem Stamm, Ästen und Früchten auf. Der Stamm und die Äste zeigen eine Rindenstruktur. Wie ein derartiges Sicherheitselement gebildet werden kann, wird aus Fig. 1b ersichtlich. Fig. 1b zeigt das Sicherheitselement der Fig. 1a im Querschnitt entlang der Linie A-A'. Das Sicherheitselement 1 weist eine Trägerfolie 10 auf, die zur gerichteten Auftragung von LCN geeignet ist, beispielsweise PET. Die Trägerfolie 10 ist in Teilbereichen mit LCN-Material bedruckt, wobei die LCN-Bereiche 11' die Früchte des Baumes darstellen und die LCN-Bereiche 11" die Rindenstruktur des Stammes bzw. der Äste des Baumes darstellen. Die LCN-Bereiche 11' und 11" bilden gemeinsam die Phasenverzögerungsschicht 11 und damit das Pole-Merkmal. Darüber befindet sich eine UV-Lackschicht 12, auf der wiederum die reflektierende Schicht 13 aufgedruckt ist. Die reflektierende Schicht 13 besteht aus Bereichen 13' aus grün gefärbter Metalleffektfarbe, die die Krone des Baumes darstellen, und Bereichen 13" aus braun gefärbter Metalleffektfarbe, die den Stamm bzw. die Äste des Baumes darstellen. Bei Betrachtung durch einen Linearpolarisator und Drehen des Linearpolarisators können die Rindenstruktur und die Früchte sichtbar gemacht bzw. wieder zum Verschwinden gebracht werden.

Es können auch noch sehr viel komplexere Motive als das hier gezeigte hergestellt werden. Wegen der einfachen Aufbringung der reflektierenden Farben im Mehrfarbendruckverfahren sind der Designfreiheit praktisch keine Grenzen gesetzt, was ein hohes Maß an Fälschungssicherheit gewährleistet. Anstelle gefärbter Metalleffektfarben könnten auf die UV-Lackschicht alternativ auch transluzente Farben aufgedruckt werden, die dann mit gefärbter (ergibt Mischfarben) oder ungefärbter Metalleffektfarbe bedruckt oder mit einer Metallschicht bedampft werden. In allen Fällen können die einzelnen Motivteile in einem Maschinendurchgang, und damit mit äußerst hoher Passergenauigkeit, hergestellt werden.

Soll die Trägerfolie 10 nach der Übertragung oder bei der Übertragung des Sicherheitselements 1 auf ein Zielsubstrat abgezogen werden, wird die UV-Lackschicht bevorzugt als Transferhilfsschicht ausgebildet, also aus einem Material hergestellt, dessen Haftung an dem LCN-Material größer ist als an der Trägerfolie. Wenn eine zur Ausrichtung des LCN-Materials ungeeignete Trägerfolie verwendet werden soll, wird zwischen LCN-Schicht und Trägerfolie bevorzugt eine Alignmentschicht vorgesehen, wobei sich dann die Auftragung einer zusätzlichen Releaseschicht zwischen Alignmentschicht und Trägerfolie empfiehlt, falls die Trägerfolie später abgezogen werden soll.

Wird auf das Sicherheitselement gemäß Fig.1 ein Linearpolarisator aufgelegt und gedreht, stellt der Beobachter fest, dass die Früchte 11' und die Rindenstruktur 11" des Baumes, je nach Stellung des Polarisators, sichtbar werden bzw. verschwinden.

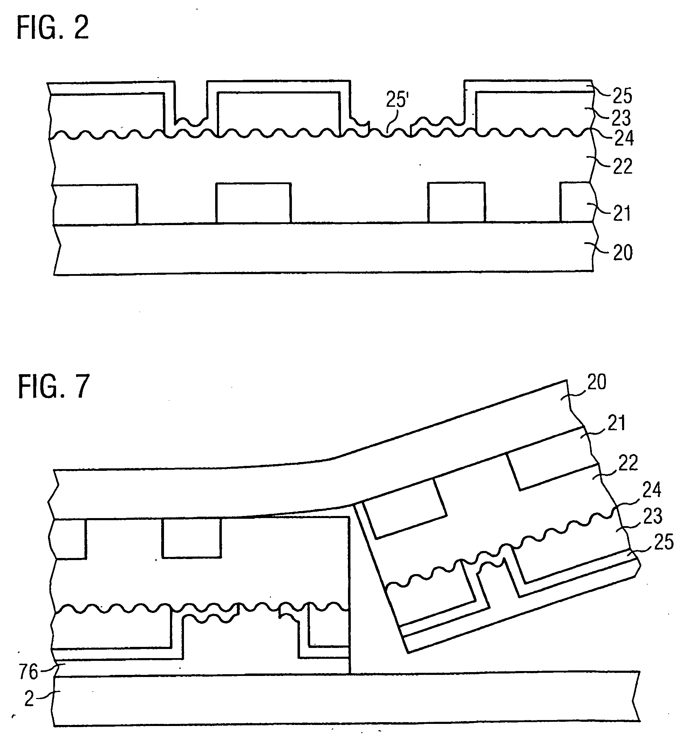

Fig. 2 stellt ein ähnliches Sicherheitselement wie Fig. 1 dar, d. h. ein Sicherheitselement 1, das hergestellt wird, indem in einem Maschinendurchgang auf eine Trägerfolie 20 eine LCN-Schicht 21, dann eine UV-Lackschicht 22 und schließlich eine Reflexionsschicht 23 aus unterschiedlich gefärbten Metalleffektfarben aufgedruckt werden. Im Unterschied zu dem in Fig. 1 gezeigten Sicherheitselement wird vor dem Aufdrucken der gefärbten Metalleffektfarben eine Beugungsstruktur 24, wie eine Hologrammstruktur, in die Oberfläche der UV-Lackschicht 22 eingeprägt. Außerdem wird die mit Metalleffektfarben bedruckte UV-Lackschicht zusätzlich vollflächig mit einer Metallschicht 25 bedampft. Auf diese Weise sieht der Betrachter typischerweise einen Hintergrund, der teilweise eine Hologrammstruktur hat und teilweise nicht. Die Hologrammstruktur, in der Farbe der Metallschicht, ist in den Bereichen der Prägung sichtbar, die nur die Metallschicht, aber keine Metalleffektfarbe aufweisen. Soll die Hologrammstruktur auch in den Bereichen, in denen die gefärbte Metalleffektfarbe vorgesehen ist, sichtbar sein, ist es empfehlenswert, die Farbe ohne Bindemittel in reinem Lösungsmittel zu verdrucken, da Bindemittel häufig einen Brechungsindex haben, der sich von dem Brechungsindex des Prägelacks zu wenig unterscheidet. Das durch die LCN-Schicht 21 gebildete Pole-Merkmal bzw. dessen Hell/Dunkel-Wechsel bei Drehung eines aufgelegten Linear-Polarisators kann vor jedem Hintergrund sichtbar gemacht werden.
In der in Fig. 2 gezeigten Ausführungsform des erfindungsgemäßen Sicherheitselements 1 weist die Metallschicht 25 eine Aussparung 25' auf. Derartige Aussparungen können beispielsweise durch Ätzen der Metallschicht 25 gebildet werden. In dem Bereich der Aussparung 25' erscheint das Sicherheitselement für einen Betrachter transluzent.

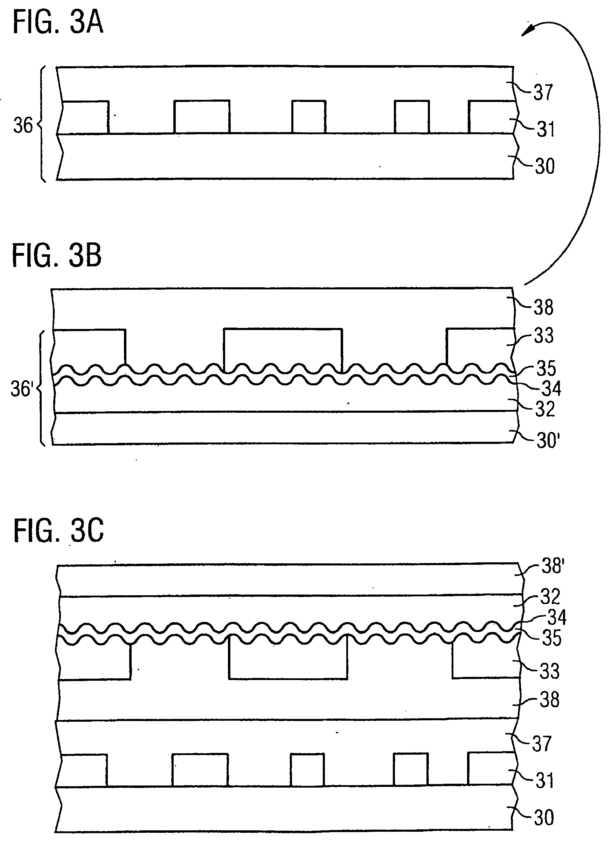

Fig. 3 veranschaulicht eine alternative Herstellungsvariante des Sicherheitselements 1. Dabei wird, wie in Fig. 3a gezeigt, ein erster Schichtaufbau 36 hergestellt, indem auf eine erste Trägerfolie 30 eine LCN-Schicht in Teilbereichen aufgedruckt wird, was die LCN-Schicht 31 ergibt, und darauf eine Transferhilfsschicht 37, beispielsweise aus UV-Lack, erzeugt wird.

Außerdem wird, wie in Fig. 3b gezeigt, ein zweiter Schichtaufbau 36' hergestellt, indem auf eine zweite Trägerfolie 30' eine Prägelackschicht 32 aufgedruckt, in die Prägelackschicht eine Prägestruktur 34, beispielsweise eine Hologrammstruktur, eingeprägt wird, auf die Prägestruktur 34 eine Metallschicht 35 aufgedampft und diese wiederum in Teilbereichen mit gefärbten Metalleffektfarben, die Metalleffektfarben-Schicht 33 ergebend, bedruckt wird.

Die LCN-Schicht des ersten Schichtaufbaus 36 und die Kombination aus Metallschicht 35 und den gefärbten Metalleffektfarben in den Bereichen 33 des zweiten Schichtaufbaus 36' bilden jeweils ein Motiv. Der zweite Schichtaufbau weist zusätzlich eine Klebstoffschicht 38 auf, mit deren Hilfe er auf den ersten Schichtaufbau, genauer auf die Transferhilfsschicht 37, aufkaschiert wird. Anschließend wird die zweite Trägerfolie 30' entfernt, beispielsweise durch Trennwicklung, und an ihrer Stelle eine Klebstoffschicht 38' aufgetragen, wie in Fig. 3c dargestellt. Mithilfe der Klebstoffschicht 38' kann nun das Sicherheitselement 1 auf einen Wertgegenstand übertragen werden.

Diese Herstellungsvariante erlaubt, was die Farbgebung des Hintergrunds betrifft, dieselbe Designfreiheit wie die vorgenannte Herstellungsvariante. Es ist allerdings schwierig, eine perfekte Passergenauigkeit zwischen Hintergrund-Motiv und LCN-Motiv zu erreichen, so dass Kombinationsmotive, wie in Fig. 1 gezeigt, kaum herstellbar sind.

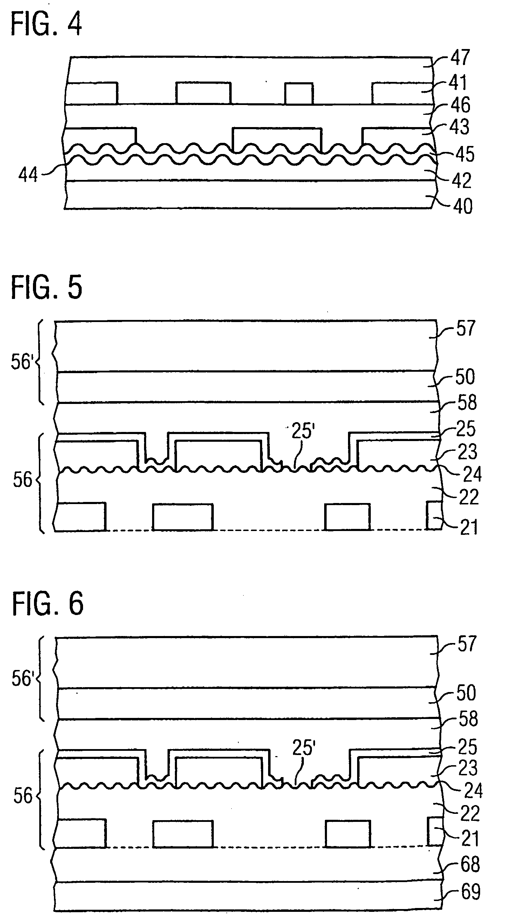

Fig. 4 zeigt eine dritte Herstellungsvariante des Sicherheitselements 1. Bei dieser Herstellungsvariante ist es die Trägerfolie 40, die als Substrat für den Schichtaufbau des Sicherheitselements dient, die mit dem Zielsubstrat verklebt wird.

Auf die Trägerfolie 40 wird ein UV-härtender Lack in Form einer Schicht 42 aufgebracht und gehärtet. In den Lack wird eine Beugungsstruktur 44, wie eine Hologrammstruktur, eingeprägt. Die Prägung wird mit einer transluzenten, hochbrechenden Schicht 45, die der Prägung folgt, überzogen und darauf wiederum ein mehrfarbiges Motiv erzeugt, indem Teilbereiche der hochbrechenden Schicht mit Aufdrucken aus unterschiedlich gefärbten Metalleffektfarben, die Metalleffektfarben-Schicht 43 ergebend, ausgestattet werden. Dieses Motiv bildet den vielfarbigen Hintergrund für das darüber vorzusehende Pole-Merkmal. Wenn das Pole-Merkmal von Flüssigkristallen gebildet wird, wie bei der hier beschriebenen Ausführungsform, muss vor der Auftragung des LCN-Motivs eine Alignmentschicht 46 für die Flüssigkristalle aufgebracht werden. Teilbereiche der Alignmentschicht werden dann mit LCN-Material zur Erzeugung des Pole-Merkmals 41 beschichtet.

Dabei ist es grundsätzlich denkbar, LCN-Bereiche mit unterschiedlich orientierten Flüssigkristallen z. B. durch Verwendung unterschiedlicher Alignmentschichten herzustellen. Zum Schutz des Schichtaufbaus kann ferner eine zusätzliche Schutzschicht 47 vorgesehen werden.

Das Sicherheitselement 1 dieser Ausführungsform zeigt für den Betrachter, sofern eine transluzente Trägerfolie 40 verwendet wird, ein bereichsweise (in den Bereichen ohne Metalleffektfarben) transluzentes Hologramm. In den Bereichen mit Metalleffektfarbe ist typischerweise kein Hologramm erkennbar, das Pole-Merkmal kann über diesen Bereichen jedoch sichtbar gemacht werden.

Da Alignmentschichten nicht mit derselben Maschine aufgebracht werden können, mit der die reflektierende Hintergrundschicht und das Pole-Merkmal aufgebracht werden, ist auch diese Herstellungsvariante nicht in einem Maschinendurchgang realisierbar. Die Passergenauigkeit zwischen Pole-Motiv und Hintergrund-Motiv ist daher weniger gut als bei der ersten Herstellungsvariante.

Fig. 5 zeigt ein Beispiel dafür, wie ein erfindungsgemäßes Sicherheitselement 1, das zusätzlich zu den beschriebenen visuellen Echtheitsmerkmalen (Pole-Merkmal vor gefärbtem Hintergrund) weitere Funktionsschichten aufweist, hergestellt werden kann. Das Sicherheitselement der Fig. 5 wird aus zwei Schichtaufbauten zusammengesetzt. Der erste Schichtaufbau 56 entspricht dem in Fig. 2 gezeigten Sicherheitselement. Der zweite Schichtaufbau 56' besteht aus einer zweiten Trägerfolie 50, auf der weitere Funktionsschichten (insbesondere mit maschinell prüfbaren Sicherheitsmerkmalen, wie Magnetcodierungen, elektrisch leitfähigen Schichten, etc.) vorgesehen sind. Die weiteren Funktionsschichten sind in Fig. 5 summarisch mit der Bezugsziffer 57 bezeichnet, da ihre genaue Art für die vorliegende Erfindung ohne Belang ist. Der zweite Schichtaufbau 56' wird mittels Kaschierkleber 58 mit dem ersten Schichtaufbau 56 verbunden. Bei dem Transfer wird die erste Trägerfolie 20 abgezogen, weshalb der erste Schichtaufbau 56 in Fig. 5 ohne diese Folie gezeigt ist. Derartige Sicherheitselemente sind beispielsweise als Sicherheitsfäden oder als Abdeckfolien für durchgehende Öffnungen in Wertdokumenten gut geeignet. Die zweite Trägerfolie wirkt hier als Fadenträger, und die UV-Lackschicht 22 wirkt gleichzeitig als Prägelackschicht und als Transferhilfsschicht für den Transfer des ersten Schichtaufbaus auf den zweiten Schichtaufbau.

Zur Aufbringung auf ein Zielsubstrat wird das Sicherheitselement mit der Funktionsschicht-Seite 57 mit dem Zielsubstrat verklebt. Über dem Pole-Merkmal kann eine zusätzliche Schutzschicht vorgesehen werden.

Fig. 6 zeigt ein erfindungsgemäßes Sicherheitselement, das in seinem Aufbau weitgehend dem in Fig. 5 gezeigten Sicherheitselement entspricht. Zusätzlich ist jedoch auf der Phasenverzögerungsschicht mittels Kaschierkleber 68 eine spezielle Folie 69 aufkaschiert, die ihrerseits einen eigenständigen Pole-Effekt aufweist. Eine geeignete Folie ist beispielsweise eine orientierte Polypropylenfolie. Durch das Aufkaschieren der doppelbrechenden Folie ergibt sich der Effekt, dass bei Betrachtung des Sicherheitselements durch einen Linearpolarisator und Drehen des Linearpolarisators das gesamte Sicherheitselement Hell/Dunkel-Kontraste zeigt. Im Bereich des Pole-Merkmals addieren sich die Effekte des LCN-Materials und der Folie, was zu besonders ausgeprägten Hell/Dunkel-Kontrasten führt.

Das Aufbringen der beschriebenen Sicherheitselemente auf ein Zielsubstrat 2, beispielsweise ein Sicherheitspapier oder eine Kunststofffolie, wird in Fig. 7 beispielhaft anhand des in Fig. 2 dargestellten Sicherheitselements erläutert. Das Sicherheitselement ist hier Teil eines Transferbands mit einer Vielzahl von Sicherheitselementen. Zur Übertragung auf das Zielsubstrat wird auf die vollflächige Metallisierung 25 des Sicherheitselements eine Schicht 76 aus Heißsiegelkleber aufgetragen und das Sicherheitselement mit dieser Schicht auf das Zielsubstrat gelegt und bereichsweise angepresst. Das Anpressen kann beispielsweise mit einem nicht dargestellten beheizten Transferstempel oder einer Transferrolle erfolgen. Unter Druck- und WärmeEinwirkung verbindet sich die Klebeschicht 76 in den gewünschten Bereichen mit dem Zielsubstrat 2, so dass ein Transferelement mit einer vorbestimmten Umrissform entsteht. Die erste Trägerfolie 20 kann beim Transferprozess oder auch kurz danach entfernt werden. Zur Verbesserung der Haftung des Transferelements auf dem Zielsubstrat kann die Oberfläche des Zielsubstrats speziell vorbehandelt werden, beispielsweise durch Auftragen eines Haftvermittlers. Durch eine gleichmäßige und gute Haftung lässt sich auch die optische Effizienz der Sicherheitsmerkmale verbessern.

Alternativ zu der vorstehend beschriebenen Aufbringung des Sicherheitselements ist es auch denkbar, die Klebeschicht nicht vollflächig auf die Metallisierung aufzubringen, sondern nur in den Bereichen, die nach Druckeinwirkung auf das Transferelement auf dem Substrat 2 verbleiben sollen. Gegebenenfalls können die partiell mit Kleber versehenen Bereiche des Sicherheitselements zur Erleichterung des Transferprozesses auch durch Sollbruchstellen von den kleberfreien Bereichen des Sicherheitselements getrennt sein. Dem Fachmann sind Einzelheiten zu einem solchen Transferverfahren bekannt, weshalb hier nicht weiter darauf eingegangen wird.

An dieser Stelle sei noch einmal angemerkt, dass das Farbmittel, abweichend von den in den Figuren 1 bis 7 gezeigten Ausführungsformen, aus Sicht des Betrachters auch vor der reflektierenden Schicht und zugleich vor der Phasenverzögerungsschicht angeordnet sein kann. Beispielsweise wäre bei einer solchen Ausführungsform das Farbmittel 23 des in Fig. 2 gezeigten Sicherheitselements aus Sicht des Betrachters vor der reflektierenden Schicht 25 und vor der Phasenverzögerungsschicht 21 angeordnet, also zwischen Trägerfolie 20 und Phasenverzögerungsschicht 21. Entsprechend wäre bei einer solchen Ausführungsform das Farbmittel 43 in Fig. 4 aus Sicht des Betrachters vor der Phasenverzögerungsschicht 41 angeordnet, also zwischen Schutzschicht 47 und Phasenverzögerungsschicht 41. Sofern diese speziellen Ausführungsformen nicht aus technischen Gründen ausgeschlossen sind, können sie bei den in den Figuren 1 bis 7 gezeigten Varianten als Alternative eingesetzt werden.

## Patentansprüche

1. Sicherheitselement (1) zur Echtheitssicherung eines Wertgegenstands, wie eines Sicherheitspapiers, eines Wertdokuments oder eines Markenartikels, aufweisend eine auf eine Lackschicht (12, 22, 32, 42) aufgebrachte reflektierende Schicht, über der in wenigstens einem Teilbereich oder vollflächig eine Phasenverzögerungsschicht (11, 21, 31, 41) angeordnet ist, wobei die reflektierende Schicht mindestens in einem Teilbereich mittels mindestens eines Farbmittels gefärbt ist und die reflektierende Schicht eine bereichsweise vorgesehene Schicht (13, 23, 33, 43) aus einer mittels mindestens eines Farbmittels gefärbten Reflexionspartikelzusammensetzung oder aus mehreren verschiedenen gefärbten Reflexionspartikelzusammensetzungen aufweist und die reflektierende Schicht außerdem eine bevorzugt vollflächige Schicht aus Reflexionsvollmaterial (25, 35) aufweist, die, aus der Richtung der Phasenverzögerungsschicht (11, 21, 31, 41) gesehen, so angeordnet ist, dass sie von den übrigen Bestandteilen der reflektierenden Schicht teilweise verdeckt wird.

2. Sicherheitselement nach Anspruch 1, **dadurch gekennzeichnet, dass** zwischen der bevorzugt vollflächigen Schicht aus Reflexionsvollmaterial (25, 35) und der Phasenverzögerungsschicht (11, 21, 31, 41) eine Schicht aus einer mindestens ein Farbmittel enthaltenden transluzenten Farbe angeordnet ist.

3. Sicherheitselement nach einem der Ansprüche 1 oder 2, **dadurch gekennzeichnet, dass** in die Lackschicht (12, 22,32,42) eine Beugungsstruktur (24, 34, 44), bevorzugt eine Hologrammstruktur, eingeprägt ist.

4. Sicherheitselement nach einem der Ansprüche 1 bis 3, **dadurch gekennzeichnet, dass** die Lackschicht (12, 22, 32, 42) als Transferhilfsschicht (37) ausgebildet ist.

5. Sicherheitselement nach einem der Ansprüche 1 bis 4, **dadurch gekennzeichnet, dass** das Reflexionsvollmaterial (25, 35) eine aufgedampfte Metallschicht ist.

6. Sicherheitselement nach einem der Ansprüche 1 bis 5, **dadurch gekennzeichnet, dass** die Reflexionspartikelzusammensetzung aus Metalleffektfarben ausgewählt ist.

7. Sicherheitselement nach einem der Ansprüche 1 bis 6, **dadurch gekennzeichnet, dass** die reflektierende Schicht Aussparungen aufweist.

8. Sicherheitspapier für die Herstellung von Sicherheits- oder Wertdokumenten, oder Wertdokument, **dadurch gekennzeichnet, dass** es mit einem Sicherheitselement (1) nach einem der Ansprüche 1 bis 7 ausgestattet ist.

9. Sicherheitspapier oder Wertdokument nach Anspruch 8, **dadurch gekennzeichnet, dass** das Sicherheitselement (1) über einem in dem Sicherheitspapier oder dem Wertdokument vorliegenden Fenster angeordnet ist.

10. Verfahren zur Herstellung eines Sicherheitselements (1) nach Anspruch 1, das eine reflektierende Schicht aufweist, über der in wenigstens einem Teilbereich oder vollflächig eine Phasenverzögerungsschicht (21) angeordnet ist, umfassend folgende Schritte:
- Bereitstellen einer Trägerfolie (20),
- Aufbringen einer Phasenverzögerungsschicht (21) auf wenigstens einen Teilbereich der Trägerfolie (20) oder vollflächig auf die Trägerfolie (20),
- Aufbringen einer Lackschicht (22), bevorzugt vollflächig, als einen Untergrund für die reflektierende Schicht,
- Bilden der reflektierenden Schicht durch
(a) Aufbringen einer Schicht (23) aus einer mittels mindestens eines Farbmittels gefärbten Reflexionspartikelzusammensetzung oder aus mehreren verschieden gefärbten Reflexionspartikelzusammensetzungen auf mindestens einen Teilbereich der Lackschicht,
wobei zur Bildung der reflektierenden Schicht nach Schritt (a) außerdem eine Schicht (25) aus Reflexionsvollmaterial, bevorzugt vollflächig, aufgebracht wird.

11. Verfahren nach Anspruch 10, **dadurch gekennzeichnet, dass** vor der Aufbringung der Schicht (25) aus Reflexionsvollmaterial eine Schicht aus einer mindestens ein Farbmittel enthaltenden transluzenten Farbe oder aus mehreren verschieden gefärbten transluzenten Farben auf mindestens einen Teilbereich der Lackschicht aufgebracht wird.

12. Verfahren zur Herstellung eines Sicherheitselements nach Anspruch 1, das eine reflektierende Schicht aufweist, über der in wenigstens einem Teilbereich oder vollflächig eine Phasenverzögerungsschicht angeordnet ist, umfassend folgende Schritte:
- Herstellen eines ersten Schichtaufbaus (36) durch
- Bereitstellen einer ersten Trägerfolie (30),
- Aufbringen einer Phasenverzögerungsschicht (31) auf wenigstens einen Teilbereich der ersten Trägerfolie (30) oder vollflächig auf die Trägerfolie (30),
- Aufbringen einer ersten Lackschicht (32), bevorzugt vollflächig, auf die Phasenverzögerungsschicht (31) und gegebenenfalls auf die erste Trägerfolie (30),
- Herstellen eines zweiten Schichtaufbaus (36') durch
- Bereitstellen einer zweiten Trägerfolie (30'),
- Aufbringen einer zweiten Lackschicht, bevorzugt vollflächig, auf die zweite Trägerfolie (30'),
- Bilden der reflektierenden Schicht durch
(a) Aufbringen einer Schicht (33) aus einer mittels mindestens eines Farbmittels gefärbten Reflexionspartikelzusammensetzung oder aus mehreren verschieden gefärbten Reflexionspartikelzusammensetzungen auf mindestens einen Teilbereich der zweiten Lackschicht,
- Verbinden des ersten (36) und des zweiten (36') Schichtaufbaus so, dass die reflektierende Schicht und die Phasenverzögerungsschicht (31) zueinander weisen,
- gegebenenfalls Abziehen der zweiten Trägerfolie (30'),
- wobei zur Bildung der reflektierenden Schicht vor Schritt (a) außerdem eine Schicht aus Reflexionsvollmaterial (35), bevorzugt vollflächig, auf die zweite Lackschicht aufgebracht wird, und die weitere Schicht oder die weiteren Schichten dann statt auf die zweite Lackschicht auf die Schicht aus Reflexionsvollmaterial aufgebracht wird oder werden.

13. Verfahren nach Anspruch 12, **dadurch gekennzeichnet, dass** auf mindestens einen Teilbereich der Schicht aus Reflexionsvollmaterial eine Schicht aus einer mindestens ein Farbmittel enthaltenden transluzenten Farbe oder aus mehreren verschieden gefärbten transluzenten Farben aufgebracht wird.

14. Verfahren zur Herstellung eines Sicherheitselements nach Anspruch 1, das eine reflektierende Schicht aufweist, über der in wenigstens einem Teilbereich oder vollflächig eine Phasenverzögerungsschicht angeordnet ist, umfassend folgende Schritte:
- Bereitstellen einer Trägerfolie (40),
- Aufbringen einer Lackschicht (42), bevorzugt vollflächig, auf die Trägerfolie (40),
- Bilden der reflektierenden Schicht durch
(a) Aufbringen einer Schicht (43) aus einer mittels mindestens eines Farbmittels gefärbten Reflexionspartikelzusammensetzung oder aus mehreren verschieden gefärbten Reflexionspartikelzusammensetzungen auf mindestens einen Teilbereich der Lackschicht,
- erforderlichenfalls Aufbringen einer Untergrundschicht (46) für die Phasenverzögerungsschicht (41),
- Aufbringen der Phasenverzögerungsschicht (41) auf wenigstens einen Teilbereich der darunterliegenden Schicht oder vollflächig auf die darunterliegende Schicht,
- gegebenenfalls Aufbringen einer Schutzschicht (47) für die Phasenverzögerungsschicht,
- wobei zur Bildung der reflektierenden Schicht vor Schritt (a) außerdem eine Schicht aus Reflexionsvollmaterial, bevorzugt vollflächig, auf die Lackschicht aufgebracht wird, und die weitere Schicht oder die weiteren Schichten dann statt auf die Lackschicht auf die Schicht aus Reflexionsvollmaterial aufgebracht wird oder werden.

15. Verfahren nach Anspruch 14, **dadurch gekennzeichnet, dass** auf mindestens einen Teilbereich der Schicht aus Reflexionsvollmaterial eine Schicht aus einer mindestens ein Farbmittel enthaltenden transluzenten Farbe oder aus mehreren verschieden gefärbten transluzenten Farben aufgebracht wird.

16. Transferband aufweisend eine Vielzahl von auf ein Substrat, wie ein Sicherheitspapier, ein Wertdokument oder einen anderen Wertgegenstand, zu transferierenden Sicherheitselementen nach einem der Ansprüche 1 bis 7, wobei die zu transferierenden Sicherheitselemente auf einer Trägerschicht des Transferbandes vorbereitet sind und das Transferband auf der der Trägerschicht entgegengesetzten Seite eine Klebeschicht (38) aufweist.

## Claims

1. A security element (1) for securing the authenticity of a value object, such as a security paper, a value document or a branded article, having a reflecting layer applied to a lacquer layer (12, 22, 32, 42), above which there is arranged in at least a partial area or all over a phase delay layer (11, 21, 31, 41), wherein the reflecting layer is colored in at least a partial area by means of at least one colorant, and the reflecting layer has a layer (13, 23, 33, 43) provided in some areas of a reflection particle composition colored by means of at least one colorant or of several different colored reflection particle compositions, and the reflecting layer further has a preferably all-over layer of reflection solid material (25, 35) which, viewed from the direction of the phase delay layer (11, 21, 31, 41), is arranged such that it is partially covered by the other components of the reflecting layer.

2. The security element according to claim 1, **characterized in that** between the preferably all-over layer of reflection solid material (25, 35) and the phase delay layer (11, 21, 31, 41) there is arranged a layer of a translucent ink containing at least one colorant.

3. The security element according to any of the claims 1 or 2, **characterized in that** in the lacquer layer (12, 22, 32, 42) a diffractive structure (24, 34, 44) is embossed, preferably a hologram structure.

4. The security element according to any of the claims 1 to 3, **characterized in that** the lacquer layer (12, 22, 32, 42) is configured as an auxiliary transfer layer (37).

5. The security element according to any of the claims 1 to 4, **characterized in that** the reflection solid material (25, 35) is a vapor-deposited metal layer.

6. The security element according to any of the claims 1 to 5, **characterized in that** the reflection particle composition is chosen from metallic effect inks.

7. The security element according to any of the claims 1 to 6, **characterized in that** the reflecting layer has gaps.

8. A security paper for manufacturing security or value documents, or a value document, **characterized in that** it is equipped with a security element (1) according to any of the claims 1 to 7.

9. The security paper or value document according to claim 8, **characterized in that** the security element (1) is arranged above a window present in the security paper or the value document.

10. A method for manufacturing a security element (1) according to claim 1, having a reflecting layer above which there is arranged a phase delay layer (21) in at least a partial area or all over, comprising the following steps of:
- making available a carrier foil (20),
- applying a phase delay layer (21) to at least a partial area of the carrier foil (20) or all over to the carrier foil (20),
- applying a lacquer layer (22); preferably all over, as a background for the reflecting layer,
- forming the reflecting layer by
(a) applying a layer (23) of a reflection particle composition colored by means of at least one colorant or of several different colored reflection particle compositions to at least a partial area of the lacquer layer, wherein for forming the reflecting layer according to step (a) there is moreover applied, preferably all over, a layer (25) of reflection solid material.

11. The method according to claim 10, **characterized in that** before applying the layer (25) of reflection solid material, there is applied to at least a partial area of the lacquer layer a layer of a translucent ink containing at least one colorant or of several different colored translucent inks.

12. A method for manufacturing a security element according to claim 1 having a reflecting layer above which there is arranged a phase delay layer in at least a partial area or all over, comprising the following steps of:
- manufacturing a first layer structure (36) by
- making available a first carrier foil (30),
- applying a phase delay layer (31) to at least a partial area of the first carrier foil (30) or all over to the carrier foil (30),
- applying a first lacquer layer (32), preferably all over, to the phase delay layer (31) and possibly to the first carrier foil (30),
- manufacturing a second layer structure (36') by
- making available a second carrier foil (30'),
- applying a second lacquer layer, preferably all over, to the second carrier foil (30'),
- forming the reflecting layer by
(a) applying a layer (33) of a reflection particle composition colored by means of at least one colorant or of several different colored reflection particle compositions to at least a partial area of the second lacquer layer,
- connecting the first (36) and the second (36') layer structure in such a fashion that the reflecting layer and the phase delay layer (31) face each other,
- possibly stripping off the second carrier foil (30'),
- wherein for forming the reflecting layer before step (a) there is moreover applied to the second lacquer layer, preferably all over, a layer of reflection solid material (35), and the further layer or the further layers is or are then applied to the layer of reflection solid material instead of to the second lacquer layer.

13. The method according to claim 12, **characterized in that** to at least a partial area of the layer of reflection solid material there is applied a layer of a translucent ink containing at least one colorant or of several different colored translucent inks.

14. A method for manufacturing a security element according to claim 1, having a reflecting layer above which there is arranged a phase delay layer in at least a partial area or all over, comprising the following steps of:
- making available a carrier foil (40),
- applying a lacquer layer (42), preferably all over, to the carrier foil (40),
- forming the reflecting layer by
(a) applying a layer (43) of a reflection particle composition colored by means of at least one colorant or of several different colored reflection particle compositions to at least a partial area of the lacquer layer,
- if required applying a background layer (46) for the phase delay layer (41),
- applying the phase delay layer (41) to at least a partial area of the layer lying thereunder or all over to the layer lying thereunder,
- possibly applying a protective layer (47) for the phase delay layer,
- wherein for forming the reflecting layer before step (a) there is moreover applied to the lacquer layer, preferably all over, a layer of reflection solid material, and the further layer or the further layers is or are then applied to the layer of reflection solid material instead of to the lacquer layer.

15. The method according to claim 14, **characterized in that** to at least a partial area of the layer of reflection solid material there is applied a layer of a translucent ink containing at least one colorant or of several different colored translucent inks.

16. A transfer band having a multiplicity of security elements according to any of the claims 1 to 7 to be transferred to a substrate, such as a security paper, a value document or other value object, wherein the security elements to be transferred are prepared on a carrier layer of the transfer band and the transfer band has an adhesive layer (38) on the side opposite the carrier layer.

## Revendications

1. Élément de sécurité (1) destiné à la protection de l'authenticité d'un objet de valeur tel que d'un papier de sécurité, d'un document de valeur ou d'un article de marque, comportant une couche réfléchissante qui est appliquée sur une couche de vernis (12, 22, 32, 42) et au-dessus de laquelle, dans au moins une zone partielle ou à pleine surface, une couche de retard de phase (11, 21, 31, 41) est agencée, la couche réfléchissante étant colorée au moins dans une zone partielle au moyen d'au moins un colorant et la couche réfléchissante comportant une couche (13, 23, 33, 43), prévue par zones, en une composition de particules réfléchissantes colorée au moyen d'au moins un colorant ou en plusieurs compositions de particules réfléchissantes colorées différentes et la couche réfléchissante comportant en outre une couche de préférence à pleine surface en matériau réfléchissant plein (25, 35) qui, vue depuis la direction de la couche de retard de phase (11, 21, 31, 41), est agencée de telle façon qu'elle est recouverte partiellement par les autres composants de la couche réfléchissante.

2. Élément de sécurité selon la revendication 1, **caractérisé en ce que** , entre la couche de préférence à pleine surface en matériau réfléchissant plein (25, 35) et la couche de retard de phase (11, 21, 31, 41), une couche en une encre translucide contenant au moins un colorant est agencée.

3. Élément de sécurité selon une des revendications 1 ou 2, **caractérisé en ce que**, dans la couche de vernis (12, 22, 32, 42), une structure de diffraction (24, 34, 44), de préférence une structure d'hologramme, est gaufrée.

4. Élément de sécurité selon une des revendications de 1 à 3, **caractérisé en ce que** la couche de vernis (12, 22, 32, 42) est réalisée en tant que couche de transfert (37).

5. Élément de sécurité selon une des revendications de 1 à 4, **caractérisé en ce que** le matériau réfléchissant plein (25, 35) est une couche métallique déposée en phase vapeur.

6. Élément de sécurité selon une des revendications de 1 à 5, **caractérisé en ce que** la composition de particules réfléchissantes est choisie parmi des encres à effets métalliques.

7. Élément de sécurité selon une des revendications de 1 à 6, **caractérisé en ce que** la couche réfléchissante comporte des évidements.

8. Papier de sécurité destiné à la fabrication de documents de sécurité ou de valeur, ou document de valeur, **caractérisé en ce qu'**il est équipé d'un élément de sécurité (1) selon une des revendications de 1 à 7.

9. Papier de sécurité ou document de valeur selon la revendication 8, **caractérisé en ce que** l'élément de sécurité (1) est agencé au-dessus d'une fenêtre se trouvant dans le papier de sécurité ou le document de valeur.

10. Procédé de fabrication d'un élément de sécurité (1) selon la revendication 1, lequel comporte une couche réfléchissante au-dessus de laquelle, dans au moins une zone partielle ou à pleine surface, une couche de retard de phase (21) est agencée, comprenant les étapes suivantes :
- mise à disposition d'un film support (20),
- application d'une couche de retard de phase (21) sur au moins une zone partielle du film support (20) ou à pleine surface sur le film support (20),
- application d'une couche de vernis (22), de préférence à pleine surface, en tant qu'un fond pour la couche réfléchissante,
- constitution de la couche réfléchissante par:
(a) application d'une couche (23) en une composition de particules réfléchissantes colorée au moyen d'au moins un colorant ou en plusieurs compositions de particules réfléchissantes différemment colorées sur au moins une zone partielle de la couche de vernis,
cependant que, pour la constitution de la couche réfléchissante, après l'étape (a), en outre une couche (25) en matériau réfléchissant plein, de préférence à pleine surface, est appliquée.

11. Procédé selon la revendication 10, **caractérisé en ce que**, avant l'application de la couche (25) en matériau réfléchissant plein, une couche en une encre translucide contenant au moins un colorant ou en plusieurs encres translucides différemment colorées est appliquée sur au moins une zone partielle de la couche de vernis.

12. Procédé de fabrication d'un élément de sécurité selon la revendication 1, lequel comporte une couche réfléchissante au-dessus de laquelle, dans au moins une zone partielle ou à pleine surface, une couche de retard de phase est agencée, comprenant les étapes suivantes :
- fabrication d'une première structure à couches (36) par
- mise à disposition d'un premier film support (30),
- application d'une couche de retard de phase (31) sur au moins une zone partielle du premier film support (30) ou à pleine surface sur le film support (30),
- application d'une première couche de vernis (32), de préférence à pleine surface, sur la couche de retard de phase (31) et le cas échéant sur le premier film support (30),
- fabrication d'une deuxième structure à couches (36') par
- mise à disposition d'un deuxième film support (30'),
- application d'une deuxième couche de vernis, de préférence à pleine surface, sur le deuxième film support (30'),
- constitution de la couche réfléchissante par
(a) application d'une couche (33) en une composition de particules réfléchissantes colorée au moyen d'au moins un colorant ou en plusieurs compositions de particules réfléchissantes différemment colorées sur au moins une zone partielle de la deuxième couche de vernis,
- jonction de la première (36) et de la deuxième (36') structure à couches, de telle façon que la couche réfléchissante et la couche de retard de phase (31) se font face,
- le cas échéant, enlèvement du deuxième film support (30'),
- cependant que, pour la constitution de la couche réfléchissante, avant l'étape (a), en outre une couche en matériau réfléchissant plein (35), de préférence à pleine surface, est appliquée sur la deuxième couche de vernis, et la couche supplémentaire ou les couches supplémentaires est ou sont appliquée(s) ensuite, au lieu de sur la deuxième couche de vernis, sur la couche en matériau réfléchissant plein.

13. Procédé selon la revendication 12, **caractérisé en ce que**, sur au moins une zone partielle de la couche en matériau réfléchissant plein, une couche en une encre translucide contenant au moins un colorant ou en plusieurs encres translucides différemment colorées est appliquée.

14. Procédé de fabrication d'un élément de sécurité selon la revendication 1, lequel comporte une couche réfléchissante au-dessus de laquelle, dans au moins une zone partielle ou à pleine surface, une couche de retard de phase est agencée, comprenant les étapes suivantes :
- mise à disposition d'un film support (40),
- application d'une couche de vernis (42), de préférence à pleine surface, sur le film support (40),
- constitution de la couche réfléchissante par
(a) application d'une couche (43) en une composition de particules réfléchissantes colorée au moyen d'au moins un colorant ou en plusieurs compositions de particules réfléchissantes différemment colorées sur au moins une zone partielle de la couche de vernis,
- si nécessaire, application d'une couche de fond (46) pour la couche de retard de phase (41),
- application de la couche de retard de phase (41) sur au moins une zone partielle de la couche sous-jacente ou à pleine surface sur la couche sous-jacente,
- le cas échéant, application d'une couche de protection (47) pour la couche de retard de phase,
- cependant que, pour la constitution de la couche réfléchissante, avant l'étape (a), en outre une couche en matériau réfléchissant plein, de préférence à pleine surface, est appliquée sur la couche de vernis, et la couche supplémentaire ou les couches supplémentaires est ou sont appliquée(s) ensuite, au lieu de sur la couche de vernis, sur la couche en matériau réfléchissant plein.

15. Procédé selon la revendication 14, **caractérisé en ce que**, sur au moins une zone partielle de la couche en matériau réfléchissant plein, une couche en une encre translucide contenant au moins un colorant ou en plusieurs encres translucides différemment colorées est appliquée.

16. Bande de transfert comprenant une pluralité d'éléments de sécurité selon une des revendications de 1 à 7 à transférer sur un substrat, tel qu'un papier de sécurité, un document de valeur ou un autre objet de valeur, les d'éléments de sécurité à transférer étant préparés sur une couche support de la bande de transfert et la bande de transfert comportant une couche de colle (38) sur la face opposée à la couche support.
